(19) Europäisches Patentamt / European Patent Office / Office européen des brevets

(11) **EP 2 383 129 A1**

(12) **EUROPEAN PATENT APPLICATION**
published in accordance with Art. 153(4) EPC

(43) Date of publication:
**02.11.2011 Bulletin 2011/44**

(51) Int Cl.:
**B60H 1/03** *(2006.01)*    **B60H 1/22** *(2006.01)*

(21) Application number: **10729238.5**

(22) Date of filing: **08.01.2010**

(86) International application number:
**PCT/JP2010/050125**

(87) International publication number:
**WO 2010/079818 (15.07.2010 Gazette 2010/28)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 09.01.2009 JP 2009003302
09.01.2009 JP 2009003300
09.01.2009 JP 2009003301
09.01.2009 JP 2009003303
21.12.2009 JP 2009289282

(71) Applicant: **Calsonic Kansei Corporation**
**Saitama-shi**
**Saitama 331-8501 (JP)**

(72) Inventors:
• **NAKAJO, Kazuo**
**Saitama-shi**
**Saitama 331-8501 (JP)**

• **TAKEI, Toshihiro**
**Saitama-shi**
**Saitama 331-8501 (JP)**
• **NODA, Yoshitoshi**
**Saitama-shi**
**Saitama 331-8501 (JP)**
• **MARUYAMA, Tomohiro**
**Saitama-shi**
**Saitama 331-8501 (JP)**
• **HARA, Junichiro**
**Saitama-shi**
**Saitama 331-8501 (JP)**

(74) Representative: **Ilgart, Jean-Christophe et al**
**BREVALEX**
**95 rue d'Amsterdam**
**75378 Paris Cedex 8 (FR)**

(54) **AIR CONDITIONING DEVICE FOR VEHICLE**

(57)    Provided is a vehicle air conditioning device with a simple structure which can quickly raise the temperature of engine cooling water used for heating the air in a vehicle cabin in an engine start period in a low ambient temperature. The vehicle air conditioning device comprises the following elements integrally connected with each other: a first water heat exchanger (26) provided in the middle of a passage through which an engine cooling water flows from the water jacket of an engine (3) to a heater core (8a), a second water heat exchanger (27) provided in the middle of a passage through which the engine cooling water flows from the heater core (8a) to the water jacket of the engine (3), and a first external heat exchanger (18) for refrigerant condensation provided between the first and second water heat exchangers (26, 27). In the engine start period in a low ambient temperature, the engine cooling water flowing from the water jacket to the heater core (8a) is heated by heat released from the first external heat exchanger (18) to rise in temperature.

FIG.1

EP 2 383 129 A1

**Description**

Technical Field

The present invention relates to a vehicle air conditioning device for air heating in a vehicle cabin using cooling water.

Background Art

In general a vehicle air conditioning device includes an air heating unit using cooling water and an air cooling unit using a refrigeration cycle.

A known air heating unit is configured to be able to heat the air in a vehicle cabin by circulating cooling water in a heater core for air conditioning of vehicle cabin (heat exchanger in vehicle cabin) and blowing the air having passed through the heater core from the air outlet of the vehicle cabin.

In heating the air in a vehicle cabin with such a vehicle air conditioning device, it takes a long time for an occupant to feel comfortably warm because the air blown into the vehicle cabin is low in temperature until the temperature of the cooling water sufficiently rises.

In order to resolve this, there is a known vehicle air conditioning device to heat the air in the vehicle cabin with a heater core by operating an air cooling unit in a low ambient temperature and heating cooling water by use of heat of high-pressure refrigerant compressed by a compressor of the air cooling unit to supply heated cooling water to the heater core (refer to Patent Document 1, for example).

The vehicle air conditioning device disclosed in Patent Document 1 comprises a single air cooling mode and multiple air heating modes. In one of the air heating modes engine cooling water in a low temperature is heated using high-pressure refrigerant of the refrigerant cycle as a thermal source while in the other modes air-conditioning air is heated for heating the air by using a heat exchanger in a cabin to use heat from high-pressure refrigerant as a thermal source.

Another way to solve the problem is a heat-pump type air heating in which in a low ambient temperature an air cooling unit is operated in an engine start period to directly heat the air in the vehicle cabin by heat from the high-pressure refrigerant compressed by a compressor of this air cooling unit. In the following this heat pump type heating by this air cooling unit is referred to as heat pump operation of the air cooling unit.

In the heat pump operation, when compressed by the compressor to generate heat for heating the air in a vehicle cabin, the high-pressure refrigerant is deprived of heat and condensed to become condensed high pressure liquid refrigerant. To compress the refrigerant with the compressor again, after the condensed liquid refrigerant is inflated to low pressure liquid refrigerant, the low-pressure liquid refrigerant needs to be gasified to refrigerant gas by using the heat exchanger to allow the low pressure liquid refrigerant to absorb heat.

When the low pressure liquid refrigerant absorbs heat in the heat exchanger, the heat of the air around the heat exchanger is deprived and the ambient air temperature therearound decreases. In order not to affect the air heating in the vehicle cabin, the heat exchanger to gasify the low pressure liquid refrigerant has to be the one placed outside the vehicle cabin Accordingly, in the heat pump operation of the air cooling unit it is necessary to increase the amount of the air in the vehicle cabin heated by the high pressure refrigerant as the ambient temperature decreases.

Prior Art Document

Patent Document

Patent Document 1: Japanese Patent Application Publication No. 8-310227

Summary of the Invention

Problems to be Solved by the Invention

However, the above method for heating the engine water has a problem that the vehicle air conditioning device has to be larger in structure and weight and include an increased number of parts and components since it requires multiple heat exchangers, a large number of check valves and electromagnetic valves, and else. This leads to increases in manufacturing costs. Further, the increase in the number of parts and components causes structural complication of the vehicle air conditioning device.

Further, in the above air cooling unit a large amount of refrigerant is accumulated in the condenser outside the vehicle cabin or the evaporator inside the cabin while the ambient temperature is low. This prevents effective use of the refrigerant in the condenser and the evaporator and so that the device cannot exert sufficient heating performance for heating the vehicle cabin simply by the heat pump operation in a low ambient temperature.

In addition, it is difficult for such an air cooling unit in the heat pump operation to rapidly increase the temperature of cooling water since the air heating ability thereof is likely to decrease along with a decrease in the ambient temperature.

In view of the above, the present invention aims to provide a vehicle air conditioning device with a simple structure which can rapidly raise the temperature of cooling water for heating the air in a vehicle cabin.

Means to Solve the Problem

In view of solving the above problem, the present invention recited in claim 1 comprises a refrigerant circulating passage arrangement for air cooling through which refrigerant is circulated among a compressor, a condenser for refrigerant condensation outside a vehicle cabin, a first inflation and depressurization means, an evaporator for air cooling and liquid refrigerant evaporation inside the vehicle cabin and an accumulator in this order; a cooling water circulating circuit for air heating configured to circulate cooling water between a heater core; a bypass passage connected in parallel with the condenser and the evaporator and connected with the compressor via the accumulator; a switching valve configured to switchably make a refrigerant discharge opening of the compressor communicate with either the condenser or the bypass passage; and a heat exchange means for water heating comprising a water heat exchange means disposed in the middle of a passage to the heater core and a refrigerant heat exchange means disposed in the middle of the bypass passage to transfer/receive heat to/from the water heat exchange means, wherein the refrigerant heat exchange means Comprises a heat exchange means for refrigerant condensation provided in series in the middle of the bypass passage and a second inflation and depressurization means configured to inflate the refrigerant condensed by the heat exchange means for refrigerant condensation; the water heat exchange means comprises a water heat exchanger configured to flow cooling water to the heater core; and the heat exchange means for refrigerant condensation is configured to be able to heat the cooling water in the water heat exchanger,

According to the present invention recited in claim 2, in the vehicle air conditioning device according to claim 1 the heat exchange means comprises first and second heat exchange means for refrigerant condensation provided in series in the middle of the bypass passage and a third heat exchange means configured to evaporate the refrigerant inflated by the second inflation and depressurization means by absorbing heat from the refrigerant condensed by the second heat exchanger.

According to the present invention recited in claim 3, in the vehicle air conditioning device according to claim 1 the water heat exchanger is provided in the middle of a passage through which the cooling water flows into the heater core.

According to the present invention recited in claim 4, in the vehicle air conditioning device according to claim 1 the water heat exchanger is provided in the middle of a passage through which the cooling water flows from the heater core.

According to the present invention recited in claim 5, in the vehicle air conditioning device according to one of claims 1 to 4 the water heat exchange means comprises a first water heat exchanger provided in the middle of the passage through which cooling water flows into the heater core and a second water heat exchanger provided in the middle of the passage through which cooling water flows from the heater core; and the first external heat exchanger is disposed between the first and second water heat exchangers.

According to the present invention recited in claim 6, in the vehicle air conditioning device according to one of claims 1 to 5, the second and third heat exchange means are integrally connected with each other to be heat exchangeable.

According to the present invention recited in claim 7, in the vehicle air conditioning device according to claim 1 the heat exchange means comprises first and second heat exchange means for refrigerant condensation provided in series in the middle of the bypass passage, and a third heat exchange means configured to absorb heat from the refrigerant condensed by the second heat exchange means to evaporate the refrigerant inflated by the second inflation and depressurization means; the water heat exchange means comprises a water heat exchanger to flow engine cooling water which flows between an engine water jacket and the heater core; the first heat exchanger is configured to be able to heat the engine cooling water in the water heat exchanger; a switching element is provided to switch among a first flow from the condenser and the first inflation and depressurization means, a second flow from the first to second heat exchange means, and a third flow from the first heat exchange means to the first inflation and depressurization means.

According to the present invention recited in claim 8, in the vehicle air conditioning device according to claim 7 the switching element is disposed in the middle of a first passage between the condenser and the first inflation and depressurization means and a second passage from the first to second heat exchangers.

According to the present invention recited in claim 9, in the vehicle air conditioning device according to claim 7 or 8 the water heat exchanger is provided in the middle of the passage through which cooling water flows from the engine water jacket to the heater core.

According to the present invention recite in claim 10. in the vehicle air conditioning device according to one of claims 7 to 9 the third heat exchange means is integrally provided with the second heat exchange means.

According to the present invention recite in claim 11, in the vehicle air conditioning device according to claim 7 the water heat exchange means comprises a first water heat exchanger provided in the middle of the passage through which cooling water flows from the water jacket to the heater core and a second water r heat exchanger provided in the middle of the passage through which cooling water flows from the heater core to the water jacket; the engine cooling water in the first water heat exchanger is heatable by the first heat exchange means, and the cooling water in the second heat exchanger is able to heat the refrigerant in the second heat exchange means; a third passage through which a first passage between the condenser and the first inflation and depressurization means and a second passage from the first to second heat exchangers communicate with each other is additionally provided; and the switching element includes a first switching element disposed between the middle of the first passage and the third passage and a second switching element disposed between the middle of the second passage and the third passage.

According to the present invention recited in claim 12, in the vehicle air conditioning device according to claim 1 the heat exchange means comprises a first prior stage heat exchange means for refrigerant condensation provided in series in the middle of the bypass passage and a first subsequent stage heat exchange means configured to absorb heat from the refrigerant condensed by the first prior stage heat exchange means to evaporate the refrigerant inflated by the second inflation and depressurization means; the water heat exchange means comprises a water heat exchanger to flow engine cooling water between an engine water jacket and the heater core; and the water heat exchanger is disposed between the first prior stage heat exchange means and the first subsequent stage heat exchange means.

According to the present invention recited in claim 13, in the vehicle air conditioning device according to claim 12, the water heat exchanger flows the engine cooling water which flows from the water jacket to the heater core, and is disposed between the first prior stage heat exchange means and the first subsequent stage heat exchange means.

According to the present invention recited in claim 14, in the vehicle air conditioning device according to claim 12, the water heat exchanger flows the engine cooling water which flows from the heater core to the water jacket, and is disposed between the first prior stage heat exchange means and the first subsequent stage heat exchange means.

According to the present invention recited in claim 15, in the vehicle air conditioning device according to claim 1, the heat exchange means comprises a first prior stage heat exchange means for refrigerant condensation provided in series in the middle of the bypass passage and a first subsequent stage heat exchange means configured to absorb heat from the refrigerant condensed by the first prior stage heat exchange means to evaporate the refrigerant inflated by the second inflation and depressurization means; the water heat exchange means comprises a first water heat exchanger to flow engine cooling water from an engine water jacket to the heater core and a second water heat exchanger to flow engine cooling water from the heater core to the engine water jacket; and the first prior stage heat exchange means is disposed between the first and second water heat exchangers and the second water heat exchanger is disposed between the first prior stage heat exchange means and the first subsequent stage heat exchange means.

The Effects of the Invention

The vehicle air conditioning device with a simple structure according to the present invention can rapidly increase the temperature of cooling water for heating the air in a vehicle cabin.

Moreover, the vehicle air conditioning device with a simple structure can rapidly increase the temperature of cooling water used for heating the air in a vehicle cabin in an engine start period in a low ambient temperature.

Brief Description of the Drawings

FIG. 1 schematically shows a passage arrangement of a vehicle air conditioning device according to a first embodiment of the present invention.

FIG. 2 schematically shows the structure of an air conditioning unit disposed in the vehicle cabin in the vehicle air conditioning device according to the first embodiment.

FIG. 3 is a block diagram of a control system of the vehicle air conditioning device according to the first embodiment.

FIG. 4 shows a normal refrigeration cycle of the vehicle air conditioning device.

FIG. 5 shows the refrigeration cycle of the vehicle air conditioning device according to the first embodiment.

FIG. 6 schematically shows a passage arrangement of a first example of the vehicle air conditioning device according to the first embodiment.

FIG. 7 schematically shows a passage arrangement of a second example of the vehicle air conditioning device according to the first embodiment.

FIG. 8 schematically shows a passage arrangement of a third example of the vehicle air conditioning device according to the first embodiment.

FIG. 9 schematically shows a passage arrangement of a vehicle air conditioning device according to a second embodiment.

FIG. 10 shows the operation of the vehicle air conditioning device according to the second embodiment.

FIG. 11 shows another operation of the vehicle air conditioning device according to the second embodiment.

FIG. 12 schematically shows a passage arrangement of an example of the vehicle air conditioning device according to the second embodiment.

FIG. 13 shows the operation of the vehicle air conditioning device in the example in FIG. 12.

FIG. 14 shows another operation of the vehicle air conditioning device in the example in FIG. 12.

FIG. 15 schematically shows a passage arrangement of a vehicle air conditioning device according to a third embodiment.

FIG. 16 schematically shows a passage arrangement of another example of the vehicle air conditioning device according to the third embodiment.

FIG. 17 schematically shows a passage arrangement of a vehicle air conditioning device according to a fourth embodiment.

FIG. 18 is an enlarged view of a heat exchange means for heating cooling water of the vehicle air conditioning device according to the fourth embodiment.

FIG. 19 shows temperature characteristics of the elements of the heat exchange means for heating cooling water of the vehicle air conditioning device according to the fourth embodiment.

Description of Embodiments

Hereinafter, embodiments of the present invention will be described in detail with reference to the accompanying drawings.

First Embodiment

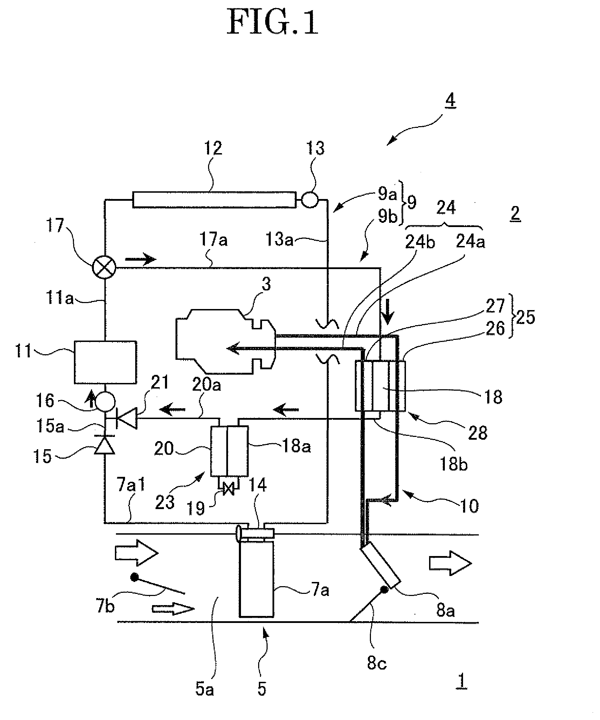

FIG. 1 schematically shows the structure of a vehicle air conditioning device according to a first embodiment of the present invention.

FIG. 1 shows a vehicle cabin 1 of a vehicle (automobile), a vehicle engine room 2, a water cooled engine 3 in the engine room 2. The engine 3 is provided with a known water jacket (not shown) for flowing engine cooling water for cooling the engine.

Further, an air conditioning unit 5 of a vehicle air conditioning device 4 is disposed in an instrument panel (not shown) at the front of the vehicle cabin 1.

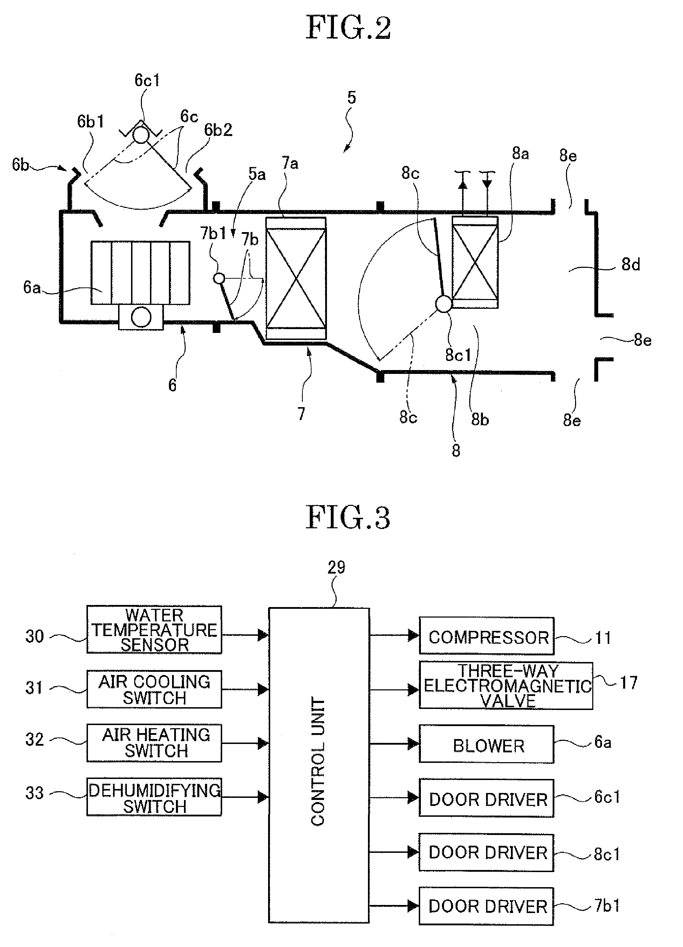

As shown in FIG. 2, the air conditioning unit 5 comprises a blower unit 6, a cooler unit 6, and a heater unit 8. An air passage 5a through which the air from the blower unit 6 flows is formed in the cooler unit 7 and the heater unit 8 of the air conditioning unit 5.

The blower unit 6 includes a blower (blowing fan) 6a and an intake unit 6b. The intake unit 6b has an outer air inlet 6b1, an inner air inlet 6b2, an intake door 6c for opening and closing the outer and inner air inlet 6b1, 6b2. The intake door 6c is driven (rotated) by a door driver 6c1 such as a motor to open and close the outer air inlet 6b1 and the inner air inlet 6b2 or adjust the opening level thereof to be able to adjust a flow intake amount of ambient air outside the vehicle cabin and inner air inside the vehicle cabin.

The ambient air from the outer air inlet 6b 1 and the inner air from the inner air inlet 6b2 or mixed air of the ambient and the inner air from the outer and inner air inlets 6b1, 6b2 are blown out by the blower 6a to the cooler unit 6.

The cooler unit 6 includes an evaporator (heat exchanger for air cooling) 7a in which cooling refrigerant circulates. The intake air from the blower unit 6 can be cooled down by the heat exchange of the evaporator 7a when passing through a not-shown air path of the evaporator 7a. The air having passed through the evaporator 7a is sent to the heater unit 8.

At upstream of the evaporator7a (between the blower 6a and evaporator 7a) an air passage adjusting door 7b is provided to open and close the lower part of the air passage 5a and driven (rotated) by a driver 7a such as a motor.

The heater unit 8 includes a heater core (heat exchanger for air heating) 8a in which the engine cooling water circulates. A bypass passage 8b to bypass the heater core 8a is provided on the side (bottom in FIG. 2) of the heater core 8a and a mixing door 8c is provided on the front face of the heater core 8a. The mixing door 8c is driven (rotated) by a driver 8c1 as a motor to adjust the opening level of a not-shown air path at upstream of the heater core 8a and adjust the ratio of amount of air flow into the air path of the heater core 8a and that into the bypass passage 8b.

A mixing chamber 8d is formed at downstream of the heater core 8a and includes an air outlet 8e in communication with a defrost grill, a vent grill, and a foot grill in the cabin.

The vehicle air conditioning device 4 in FIG. 1 comprises a refrigerant circulating passage arrangement 9, and a cooling water circulating passage arrangement 10 for air heating. The refrigerant circulating passage arrangement 9 includes a first refrigerant circulating passage arrangement 9a for air cooling refrigeration cycle (air cooling cycle) and a second refrigerant circulating passage arrangement 9b for refrigeration cycle for heating cooling water (air heating cycle).

The first air-cooling refrigerant circulating passage arrangement 9a includes a compressor 11 driven by an engine, a first cooling refrigerant passage 11a connected at one end with a not-shown refrigerant outlet (refrigerant exit side) of the compressor 11 and a condenser 12 for refrigerant condensation connected with the other end of the first air-cooling refrigerant passage 11a and disposed outside the vehicle cabin 1.

Further, the first air-cooling refrigerant circulating passage arrangement 9a includes a liquid tank 13 connected at a refrigerant inlet (not shown) with a refrigerant outlet (not shown) of the condenser 12, a second air-cooling refrigerant passage arrangement 13a connected at one end with a refrigerant outlet (not shown) of the liquid tank 13, a first orifice (first inflation and depressurization means) 14 connected at a refrigerant inlet (not shown) with the other end of the second cooling refrigerant passage arrangement 13a, and the above evaporator 7a for air cooling connected with a refrigerant outlet (not shown) of the first orifice 14.

The first orifice 14 is configured to sense (detect) the temperature and pressure of the refrigerant discharged (flowed) from the refrigerant outlet (not shown) of the evaporator 7a, adjust the flow amount of liquid refrigerant into the refrigerant inlet (not shown) of the evaporator 7a in accordance with a load. That is, the flow amount of the liquid refrigerant into the refrigerant inlet (not shown) of the evaporator 7a is adjusted so that the refrigerant discharged (flowed) from the refrigerant outlet (not shown) of the evaporator 7a is in a heated condition (heat level) at a target (predetermined) temperature and pressure. A known structure is adaptable to this; therefore, a detailed description is omitted.

Further, the first air-cooling refrigerant circulating passage arrangement 9a comprises a third air-cooling refrigerant passage 7a1 connected at one end with the refrigerant, outlet (not shown) of the evaporator 7a, a first one-way valve 15 connected at a refrigerant inlet (not shown) with the other end of the third air-cooling refrigerant passage 7a1, a fourth air-cooling refrigerant passage 15a at one end with a refrigerant outlet (not shown) of the first one-way valve 15, and an accumulator 16 for gas-liquid separation.

The refrigerant discharged from the compressor 11 is circulated through the first air-cooling refrigerant passage 11a, condenser 12, liquid tank 13, second air-cooling refrigerant passage 13a, first orifice 14, evaporator 7a, third air-cooling refrigerant passage 7a1, first one-way valve 15, fourth air-cooling refrigerant passage 15a, and accumulator 16 in this order, and then returned to the compressor 11 to circulate. Thus, a first refrigeration cycle is repeated.

Here, the compressor 11 compresses refrigerant gas to generate high-temperature, high-pressure compressed refrigerant (compressed refrigerant gas). The condenser 12 releases heat from the compressed refrigerant to ambient air to cool down and condense compressed refrigerant to generate liquid refrigerant. The liquid tank 13 contains the liquid refrigerant and the first orifice 14 inflates the high-pressure liquid refrigerant from the liquid tank 13 to generate low pressure liquid refrigerant (condensed refrigerant).

The liquid refrigerant from the first orifice 14 is supplied to the inside of the evaporator 7a and absorbs (deprives) heat from the air in the air passage 5a. When cooling the air in the air passage 5a, the liquid refrigerant is evaporated to become refrigerant gas. The refrigerant gas is returned to the compressor 11 via the third air-cooling refrigerant passage 7a1, first one-way valve 15, fourth air-cooling refrigerant passage 15a and accumulator 16.

The second refrigerant circulating passage arrangement 9b includes the compressor 11, a three-way electromagnetic switching valve 17 interposed in the middle of the first cooling refrigerant passage 11a, a first bypass refrigerant passage 17a connected at one end with the three-way electromagnetic switching valve 17, and a first external heat exchanger 18 disposed outside the vehicle cabin 1 and connected at a refrigerant inlet (not shown) with the other end of the first bypass refrigerant passage 17a. The second refrigerant circulating passage arrangement 9b includes a second bypass refrigerant passage 18b connected at one end with a refrigerant outlet (not shown) of the first external heat exchanger 18. a second external heat exchanger 18a disposed outside the vehicle cabin 1 and connected with the other end of the second bypass refrigerant passage 18b, a second orifice (second inflation and depressurization means) 19 outside the vehicle cabin 1 connected with a refrigerant outlet (not shown) of the second external heat exchanger 18a.

Further, the second refrigerant circulating passage arrangement 9b includes a third external heat exchanger 20 supplied with refrigerant inflated by the second orifice 19, a third bypass refrigerant passage 20a connected at one end with a refrigerant outlet (not shown) of the third external heat exchanger 20, a second one-way valve 21 connecting between the other end of the third bypass refrigerant passage 20a and the middle of the fourth cooling refrigerant passage 15a connected with a refrigerant outlet (not shown) of the first one-way valve 15, and the accumulator 16. The second and third external heat exchangers 18a, 20 are integrally provided.

The refrigerant discharged from the compressor 11 is circulated through the three-way electromagnetic switching valve 17, first bypass refrigerant passage 17a, first external heat exchanger 18, second bypass refrigerant passage 18b, second external heat exchanger 18a, second orifice 19, third external heat exchanger 20, third bypass refrigerant passage 20a, second one-way valve 21, and accumulator 16 in this order, and then returned to the compressor 11 to circulate. Thus, a second refrigeration cycle is repeated.

In the present embodiment the refrigerant heat exchange means 23 is comprised of the above first external heat exchanger 18, second external heat exchanger 18a, and third external heat exchanger 20. Also, the first to third bypass refrigerant passages 17a, 18b, 20a constitute a bypass passage connected with the compressor 11 in parallel with the condenser 12 and evaporator 7a. The refrigerant heat exchange means 23 comprised of the first to third external heat exchangers 18, 18a, 20 are disposed on the bypass passage.

In the present embodiment the first external heat exchanger 18 functions as a heat exchanger for refrigerant condensation (heating cooling water), the second external heat exchanger 18a as a heat exchanger for refrigerant condensation, and the third external heat exchanger 20 as a heat exchanger for refrigerant evaporation.

The cooling water circulating passage arrangement 10 for air heating includes a passage in the water jacket (not shown) of the engine 3 and a cooling water circulating passage 24 through which cooling water discharged from an outlet (not shown) of the water jacket by a not-shown water pump flows to the heater core 8a and then returns to the passage in the water jacket of the engine 3.

The cooling water circulating passage 24 includes a first cooling water passage 24a connecting (making communicate) the cooling water outlet (not shown) of the water jacket of the engine 3 and the cooling water inlet (not shown) of the heater core 8a as well as a second cooling water passage 24b connecting (making communicate) a first cooling water outlet (not shown) connected with the cooling water inlet (not shown) of the heater core 8a and the cooling water inlet (not shown) of the water jacket of the engine 3. Further, the water heat exchange unit 25 is disposed in the middle of the cooling water circulating passage 24,

The water heat exchange unit 25 includes a first water heat exchanger 26 provided in the middle of the first cooling water passage 24a and a second water heat exchanger 27 provided in the middle of the second cooling whaler passage 24b. A part of the first cooling water passage 24a is formed in the first water heat exchanger 26 while a part of the second cooling water passage 24b is formed in the second water heat exchanger 27.

The first external heat exchanger 18 is disposed between the first and second water heat exchangers 26, 27, and the first and second water heat exchangers 26, 27 and first external heat exchanger 18 constitute the heat exchange means 28 for heating cooling water.

Thus, the first water heat exchanger 26 is integrally provided with the first external heat exchanger 18 for refrigerant to be able to transfer heat therebetween. By this heat transfer, the engine cooling whaler in the first water heat exchanger 26 is heated by the heat from the high-temperature, high-pressure compressed refrigerant supplied to the first external heat exchanger 18 from the compressor 11. The gaseous high-pressure refrigerant is heated, deprived of heat and condensed in the first external heat exchanger 18, to become liquid refrigerant.

Also, the second water heat exchanger 27 is integrally provided with the first external heat exchanger 18 to be able to transfer heat therebetween. By this heat transfer, the liquid refrigerant from the first external heat exchanger 18 heats the engine cooling water flowing from the heater core 8a to the water jacket of the engine 3.

The operation of the blower 6a (FIG. 2), compressor 11, three-way electromagnetic switching valve 17 and the like of the above air conditioning unit 5 are controlled by a control signal from the control unit (control means) 29 in FIG. 3.

Further, a water temperature sensor 30 (FIG. 3) is provided in the middle of the first cooling water passage 24a to detect the temperature of the cooling water and output a detection signal as a water temperature signal (temperature signal). The detection signal from the water temperature sensor 30 is input to the control unit 29. As shown in FIG. 3, the control unit 29 receives operation signals (ON/OFF signals) from an air cooling switch 31 and an air heating switch 32.

The water temperature sensor 30 is provided in at least one of the water jacket of the engine and the cooling water circulating passage 24 and the detection signals are input to the control unit 29 via a signal communication system. The operation signals (ON/OFF signals) from the air heating switch 32 are input to the control unit 29 automatically or manually by an occupant.

Next, the operation of the above vehicle air conditioning device 4 according to the present embodiment is described.

(Normal Air cooling Operation)

Upon receiving an ON signal from the air cooling switch 31 after the engine 3 starts, the control unit 29 starts controlling normal air cooling operation.

The control unit 29 controls the operation of the three-way electromagnetic switching valve 17 to shut off the communication between the refrigerant outlet (not shown) of the compressor 11 and the first bypass refrigerant passage 17a and to make the refrigerant outlet (not shown) of the compressor 11 and the refrigerant inlet (not shown) of the condenser 12 communicate with each other.

Thereafter, the control unit 29 controls the operation of a door driver 8c1 of the heater unit 8 to close the upstream of an air path (not shown) of the heater core 8a with a mixing door 8c, and controls the operation of a door driver 6c1 of the intake unit 6b to close the outer air inlet 6b1 of the intake unit 6b and open the inner air inlet 6b2.

Along with this, the control unit 29 operates the blower 6a to absorb the air in the vehicle cabin 1 via the inner air inlet 6b2. The absorbed air is flowed through the air passage 5a and a not-shown air path of the evaporator 7a and blown in the vehicle cabin 1 from the air outlet 8e via the bypass passage 8b and mixing chamber 8d of the heater unit 8.

Further, the control unit 29 controls the compressor 11 to start compressing gaseous refrigerant (refrigerant gas) and discharge high temperature, high pressure compressed refrigerant to the first air-cooling refrigerant passage 11a. The compressed refrigerant is supplied to the condenser 12 via the three-way electromagnetic switching valve 17, and cooled and condensed thereby to become liquid refrigerant. After accumulated in the liquid tank 13, the liquid refrigerant is supplied to the first orifice 14 via the second air-cooling refrigerant passage 13a and inflated (depressurized).

The depressurized liquid refrigerant is supplied to the evaporator 7a in the vehicle cabin 1 and blown from the blower 6a to absorb heat from the air of the vehicle cabin 1 flowing in a not-shown air path of the evaporator 7a and reduces the temperature of the air. The air in the lower temperature is blown from the air outlet 8e in the vehicle cabin 1 to cool the air in the vehicle cabin 1.

Here, the liquid refrigerant from the first orifice 14 is evaporated by the heat absorption to become gaseous. This refrigerant (refrigerant gas) is returned to the compressor 11 to circulate via the third air-cooling passage 7a1, first one-way valve 15, fourth air-cooling refrigerant passage 15a and accumulator 16, and compressed by the compressor 11.

(Air Heating Operation in Low Ambient Temperature)

At start of the engine 3 by turning on a not-shown ignition switch of the vehicle, the water temperature sensor 30 detects the temperature of the engine cooling water of the water jacket of the engine 3 and outputs a temperature detection signal to the control unit 29.

Then, the air heating switch 32 is turned on and an ON signal is input to the control unit 29 as an instruction for air heating of the vehicle air conditioning device 4. The control unit 29 determines from the temperature detection signal of the water temperature sensor 30 whether or not the temperature of the engine cooling water has reached a required temperature (predetermined temperature) for heating the air in the vehicle cabin 1 from t.

In the engine starting period in a low ambient temperature in winter or else, determining that the temperature of the engine cooling water has reached a required temperature (predetermined temperature) for heating the air in the vehicle cabin 1, the control unit 29 controls the operation of the three-way electromagnetic switching valve 17.

The control unit 29 controls the three-way electromagnetic switching valve 17 to shut off the refrigerant outlet (not shown) of the compressor 11 and the refrigerant inlet (not shown) of the condenser 12 and make the refrigerant outlet (not shown) of the compressor 11 communicate with the first bypass refrigerant passage 17a of the bypass passage. In this manner, even with the compressor 11 in operation, the refrigerant is prevented from flowing through the condenser 12, liquid tank 13, first orifice 14, evaporator 7a and else,

Then, the control unit 29 controls the door driver 8c1 of the heater unit 8 to open the upstream of the air path (not shown) of the heater core 8a with the mixing door 8c and controls the door driver 6c1 of the intake unit 6b to close the outer air inlet 6b1 of the intake unit 6b and open the inner air inlet 6b2.

Next, the control unit 29 operates the blower 6a to absorb the air in vehicle cabin 1 from the inner air inlet 6b2. The absorbed air flows into the air passage 5a and the not-shown air path of the evaporator 7a and is blown out in the vehicle cabin 1 from the air outlet 8e via the air path of the heater unit 8 (not shown) and the mixing chamber 8d. Even with the compressor 11 in operation, the refrigerant is prevented from supplied to the evaporator 7a as described above, so that the air from the blower 6a passing through the air path (not shown) of the evaporator 7a cannot be cooled by the evaporator 7a.

The control unit 29 then operates the compressor 11 to compress the refrigerant gas and discharge high-temperature, high-pressure compressed refrigerant to the first air-cooling refrigerant passage 11a. The compressed refrigerant flows through the three-way electromagnetic switching valve 17, first bypass refrigerant passage 17a, first external heat exchanger 18, second bypass refrigerant passage 18b, second external heat exchanger 18a, second orifice 19, third external heat exchanger 20, third bypass refrigerant passage 20a, second one-way valve 21, and accumulator 16 in this order, and is returned to the compressor 11 to circulate.

Here, the compressed refrigerant is heat-released and condensed in the first external heat exchanger 18 to become high-temperature, high-pressure liquid refrigerant, which is flowed through the second external heat exchanger 18a of the refrigerant heat exchanger 23, second orifice 19, and third external heat exchanger 20 in this order and flowed out to the third bypass refrigerant passage 20a.

The heat of the liquid refrigerant flowing into the second external heat exchanger 18a is absorbed into the refrigerant in the third external heat exchanger 20. The absorbed liquid refrigerant is supplied to the second orifice 19 from the second external heat exchanger 18a.

The liquid refrigerant is inflated and depressurized by the second orifice 19 and flowed into the third external heat exchanger 20 and evaporated therein. The evaporated refrigerant is evaporated in the third external heat exchanger 20, absorbing heat from the second external heat exchanger 18a to become refrigerant gas, as described above, The refrigerant gas evaporated is returned to the compressor 11 via the third bypass refrigerant passage 20a, first one-way valve 15, and accumulator 16.

The engine cooling water from the water jacket of the engine 3 is flowed into the heater core 8a via the first water heat exchanger 26 and returned to the water jacket of the engine 3 via the second water heat exchanger 27 to circulate.

Along with this, heat from the compressed refrigerant flowing in the first external heat exchanger 18 is transferred between the first external heat exchanger 18 and the first water heat exchanger 26 to heat the engine cooling water flowing in the first water heat exchanger 26 to the heater core 8a. Also, the heat therefrom is transferred between the first external heat exchanger 18 and the second water heat exchanger 27 to heat the engine cooling water in the second water heat exchanger 27 flowing from the heater core 8a to the water jacket of the engine 3.

The engine cooling water heated in the first external heat exchanger 18 and the first water heat exchanger 26 is supplied to the heater core 8a and heats the air flowing through the air path (not shown) of the heater core 8a. The heated air is blown out in the vehicle cabin 1 from the air outlet 8e to warm there.

Through the above operation, an ideal refrigeration cycle is formed by releasing condensation heat by the high-pressure gaseous refrigerant from the compressor 11 into the engine cooling water in the first external heat exchanger 18 and negating it with evaporated heat of the low-pressure refrigerant in the refrigerant heat exchange means 23 to generate a difference in the pressure level. That is, the amount of heat corresponding to only the power of the compressor 11 is released into the engine cooling water.

As described above, the vehicle air conditioning device 4 according to the first embodiment comprises the refrigerant circulating passage arrangement 9 for air cooling to circulate refrigerant through the compressor 11 driven by the engine, condenser 12 for refrigerant condensation outside the vehicle cabin 1, first orifice 14 and evaporator 7a for air cooling in the vehicle cabin and evaporating liquid refrigerant as well as the cooling water circulating passage arrangement 10 for air heating to circulate the engine cooling water between the water jacket of the engine 3 and the heater core in the vehicle cabin 1.

Further, the vehicle air conditioning device 4 includes the bypass passage connected with the compressor 11 in parallel with the condenser 12 and evaporator 7a and the three-way electromagnetic switching valve 17 to switchably make the refrigerant discharge opening of the compressor 11 communicate with either of the condenser 12 and the bypass passage.

Further, the vehicle air conditioning device 4 comprises the heat exchange means 28 for heating cooling water which includes the water heat exchange unit 25 interposed in the middle of the passage between the water jacket of the engine 3 and the heater core 8a, and the first external heat exchanger 18 provided in the middle of the bypass passage to transfer/receive heat to/from the water heat exchange unit 25.

Further, the vehicle air conditioning device 4 includes the control unit 29 configured to operate the compressor 11 of the first air-cooling refrigerant circulating passage arrangement 9a and control the three-way electromagnetic switching valve 17 when the temperature of the engine cooling water is a predetermined value or less at the engine start, to make the refrigerant discharge opening of the compressor 11 communicate with the bypass passage.

Further, the refrigerant heat exchange unit 23 comprises the first and second external heat exchangers 18, 18a provided in series in the middle of the bypass passage, the second orifice 19 to inflate the refrigerant condensed by the first and second external heat exchangers 18, 18a, and the third external heat exchanger 20 to evaporate liquid refrigerant inflated by the second orifice 19 by absorbing heat therefrom.

Further, the water heat exchange unit 25 comprises either or both of the first water heat exchanger 26 and the second water heat exchanger 27 to flow the engine cooling water between the water jacket of the engine 3 and the heater core 8a, The first external heat exchanger 18 is configured to be able to heat the engine cooling water in the water heat exchange unit 25 (either or both of the first and second water heat exchangers 26, 27). The second and third external heat exchangers 18a, 20 are integrally superimposed on each other to be heat exchangeable.

With such a configuration, it is possible to rapidly increase the temperature of the engine cooling water used for heating the air in the vehicle cabin in an engine start period in a low ambient temperature. Specifically, the temperature of the engine cooling water can be rapidly increased in an engine start period in a low ambient temperature by heating with the heat released from the second external heat exchanger 18a for refrigerant.

Thus, such a simple structure using the refrigeration cycle has a means to solve the problem with the heat pump operation (unable to absorb heat from the ambient air during a low ambient temperature, causing a delay in the cycle rising). Specifically, it is possible to use the high-pressure, high-temperature refrigerant as a high-temperature heat source by absorbing heat from its own heat and enlarging a difference in the high and low pressures of refrigerant in the refrigeration cycle at an early point. Moreover, by combining with cooling water heating, the cooling water for the engine, for example, can heat the engine itself, making it possible to greatly shorten the engine warm-up time and greatly reduce the fuel amount largely consumed for the warming-up. Using the cooling water for air heating in the air conditioning of the vehicle cabin, a secondary effect that quick warming-up performance is attainable can be expected.

Furthermore, in the vehicle air conditioning device 4 according to the first embodiment the first water heat exchanger 26 is provided in the middle of the passage through which the engine cooling water is flowed from the water jacket of the engine 3 to the heater core 8a.

Thereby, it is possible to rapidly increase the temperature of the engine cooling water flowing from the water jacket of the engine 3 to the heater core 8a to heat the air in the vehicle cabin in an engine start period in a low ambient temperature. Specifically, the temperature of the engine cooling water flowing from the water jacket of the engine 3 to the heater core 8a can be rapidly increased by heating with the heat released from the first external heat exchanger 18 for refrigerant.

Moreover, in the vehicle air conditioning device 4 according to the first embodiment the second water heat exchanger 27 is provided in the middle of the passage through which the engine cooling water is flowed from the heater core 8a to the water jacket of the engine 3.

Thereby, it is possible to rapidly increase the temperature of the engine cooling water returning to the water jacket of the engine 3 from the heater core 8a to heat the air in the vehicle cabin in the engine start period in a low ambient temperature. Specifically, the temperature of the engine cooling water returning to the water jacket of the engine 3 from the heater core 8a can be rapidly increased by heating with the heat released from the first external heat exchanger 18 for refrigerant.

Further, the vehicle air conditioning device 4 according to the first embodiment comprises the first water heat exchanger 26 provided in the middle of the passage through which the engine cooling water is flowed from the water jacket of the engine 3 to the heater core 8a, the second water heat exchanger 27 provided in the middle of the passage through which the engine cooling water is flowed from the heater core 8a to the water jacket of the engine 3, and the first external heat exchanger 18 disposed between the first and second water heat exchangers 26,27.

Thereby, it is possible to rapidly increase the temperature of the engine cooling water flowing from the water jacket of the engine 3 to the heater core 8a to heat the air in the vehicle cabin in the engine start period in a low ambient temperature. Specifically, the temperature of the engine cooling water flowing from the water jacket of the engine 3 to the heater core 8a can be rapidly increased by heating with the heat released from the first external heat exchanger 18 for refrigerant.

Also, it is possible to rapidly increase the temperature of the engine cooling water returning to the water jacket of the engine 3 from the heater core 8a to heat the air in the vehicle cabin in the engine start period in a low ambient temperature. Specifically, the temperature of the engine cooling water returning to the water jacket of the engine 3 from the heater core 8a can be rapidly increased by heating with the heat released from the first external heat exchanger 18 for refrigerant. This makes it possible to prevent trouble in the engine warm-up operation even with a decrease in the temperature of the engine cooling water for heating the air in the vehicle cabin, since the engine cooling water is heated by the first external heat exchanger 18 while returning to the water jacket of the engine 3.

Moreover, in the vehicle air conditioning device 4 according to the first embodiment the second and third external heat exchangers 18a, 20 are integrally connected to each other to be heat-exchangeable.

With such a configuration, heat of the liquid refrigerant flowing into the second external heat exchanger 18a is absorbed by the refrigerant in the third external heat exchanger 20 and evaporated to become refrigerant gas. Then, the refrigerant gas is returned to the compressor 11 via the accumulator 16. Thereby, it is made possible to smoothly circulate the refrigerant for heating the air in the vehicle cabin using the engine cooling water in the engine start period in a low ambient temperature. As a result, it is possible to rapidly increase the temperature of the cooling water by heating with the heat released from the second external heat exchanger 18a for refrigerant.

Further, in the vehicle air conditioning device 4 according to the first embodiment the second and third external heat exchangers 18a, 20 are provided with a partition to separate high pressure refrigerant and low pressure refrigerant to directly exchange heat so that the heat exchange amounts on the high and low pressure sides are equal. Moreover, an ideal refrigeration cycle is formed by releasing condensation heat by the high-pressure gaseous refrigerant discharged from the compressor 11 into the engine cooling water in the first external heat exchanger 18 and negating it with evaporated heat of the low-pressure refrigerant in the second external heat exchanger 18a to generate a difference in the pressure level. That is, the amount of heat corresponding to only the power of the compressor 11 is released from the first external heat exchanger 18.

Further, owing to the integration of the first and second water heat exchanger 26, 27 and the first external heat exchanger 18, it is possible to downsize the heat exchange means 28 for heating cooling water comprising the first and second water heat exchangers 26, 27 and first external heat exchanger 18 and reduce the space in which the heat exchange means 28 for heating cooling water is disposed.

Furthermore, in the vehicle air conditioning device 4 according to the first embodiment the accumulator 16 is disposed at downstream of the first and second one-way valves 15, 21 in order to secure a necessary amount of refrigerant for heating the air.

That is, in a low ambient temperature the refrigerant is accumulated in the condenser 12 and the evaporator 7a (due to refrigerant movement caused by no usage over a long time and low ambient temperature). The accumulation of necessary refrigerant in the air cooling line (condenser 12 and evaporator 7a) prevents the air heating operation from producing sufficient air heating effects. In view of this, it can be configured that the device is set in a refrigerant retrieval mode at initial startup so that the amount of refrigerant necessary for heating the air can be secured in the accumulator 16.

Herein, the refrigerant retrieval mode refers to a mode for a normal air cooling cycle operation in which the refrigerant accumulated in the air cooling line as the condenser 12 and the evaporator 7a is transferred by the air cooling cycle operation and retrieved into the accumulator 16. Although the normal air cooling cycle includes a liquid tank and an expansion valve system and does not intrinsically need the accumulator considering a pressure loss, the vehicle air conditioning device according to the first embodiment intentionally includes the accumulator 16 at this position.

Next, the position of the accumulator 16 is described in detail.

The refrigerant circulating system of the vehicle air conditioning device is configured to compress the refrigerant gas with the compressor, supply it to an outside heat exchanger (high-pressure heat exchanger), cool down and liquefy the supplied refrigerant by blowing ambient air to the outside heat exchanger with an outside blower fan in the refrigeration cycle at air cooling. In addition, it is configured to supply the liquefied refrigerant to an inside heat exchanger (low-pressure heat exchanger) via an expansion valve and supply the air in the vehicle cabin thereto with an inside blower fan. Thus, the air in the vehicle cabin can be cooled by the inside heat exchanger.

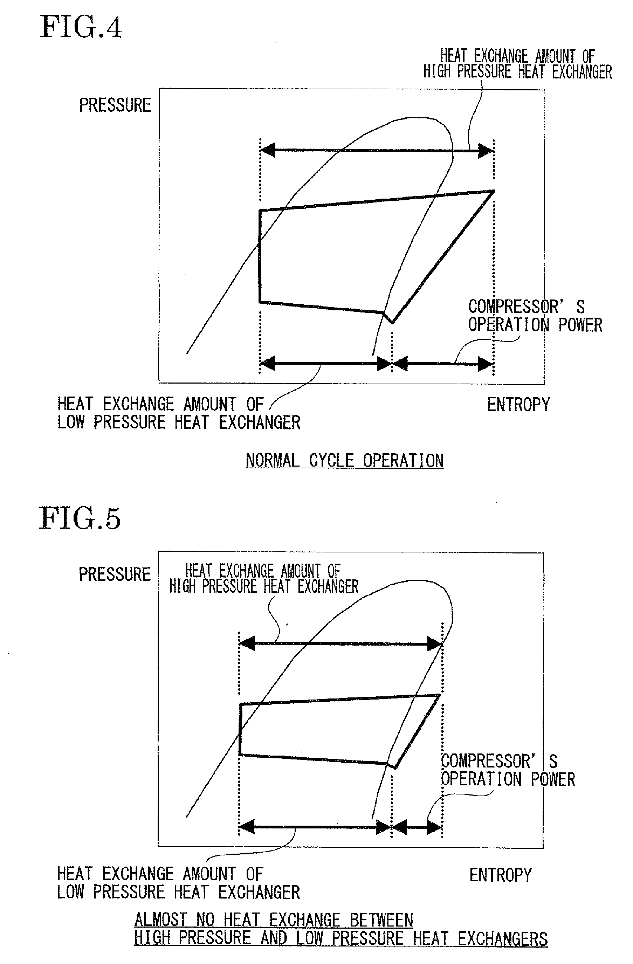

FIG. 4 shows a difference in the high and low pressures of the refrigeration cycle during such normal air cooling.

Meanwhile, a vehicle such as an automobile is configured to cool the engine using coolant (engine cooling water) during engine operation. The coolant is supplied to a heater core of an air conditioner in the vehicle cabin to heat the air in the vehicle cabin for the purpose of supplementing the air heating performance in winter. Also, in addition to such an air heating unit using the coolant, there is an air heating unit for an automobile using the refrigerant circulating system of the vehicle air conditioning device to perform heat pump operation.

The refrigeration cycle of the air heating unit additionally having the heat pump operation uses as a heat source the refrigerant of the refrigerant circulating system used for the air cooling of the vehicle air conditioning device so that the low-pressure, low-temperature refrigerant is left unused in the inside heat exchanger. Because of this, the air in the vehicle cabin is cooled by operation of the blower fan in the air heating unit additionally having the heat pump operation. In order to prevent this, the inside blower fan is set to operate in low speed in the refrigeration cycle during the air heating.

Moreover, in the vehicle air conditioning device the outside blower fan is caused to stop in the refrigeration cycle during the air heating since the amount of heat for air heating decreases by releasing heat from the high-pressure, high-temperature refrigerant remaining in the outside heat exchanger into ambient air.

In the refrigeration cycle during the air heating, there is almost no heat exchange between the high-pressure and low pressure heat exchangers. FIG. 5 shows a difference in the high and low pressures of the refrigeration cycle during such air heating.

In comparing the difference in the high and low pressures of the refrigeration cycle during the normal air cooling in FIG. 4 and the same during the air heating in FIG. 5, the difference during the air heating is largely smaller than that during the air cooling so that the operation power of the compressor in the refrigeration cycle during the air heating is reduced.

In FIGs. 4, 5 the abscissa axis shows the amount of heat per unit mass. Using entropy in FIGs. 4, 5, an actual heat exchange amount of the heat exchanger is calculated by the following equation:

$$\text{Heat exchange amount of heat exchanger} = \text{entropy} \times \text{mass flow}$$

In the air cooling system having such refrigeration cycle, since a large amount of refrigerant is left unused in the outside and inside heat exchangers having a large inner volume, the power of the compressor is reduced and the pressure and temperature on the high pressure side remain low. Thus, it is difficult to use as a high-temperature heat source the refrigerant circulating system of the vehicle air conditioning device simply configured to stop the blower fan in the refrigeration cycle (heat pump operation) during the air heating.

Further, the refrigerant circulating system of the vehicle air conditioning device generally uses, as a heat source for the air heating, the high-pressure, high-temperature refrigerant releasing heat to ambient air in the refrigeration cycle (cooling cycle). Therefore, when the refrigeration cycle starts operating at the engine start, the refrigerant as a high-temperature heat source heats the vehicle cabin and the air-conditioning air passes through the hear core in the inner air circulation to slightly warm the engine cooling water.

However, this system works such that the low-pressure refrigerant in the refrigeration cycle is heated by the air-conditioning air with the evaporator while the air-conditioning air is heated by the high-pressure refrigerant. As a result, as shown in a change from FIG. 5 to FIG. 4, the pressure increases on the high-pressure side and decreases on the low-pressure side so that it takes a long time for the operation power of the compressor to increase.

Note that it was found by experiment that it took five or more minutes to generate a difference in pressure by 0.5 MPa at the ambient air being at 0 degree and it was not sufficient to quickly heat the air.

There is another way to prevent a performance decrease in a low ambient temperature that a sub condenser is placed in the vehicle cabin in a position to be able to receive heat from the heater core. However, the addition of the sub condenser increases the size of the air-conditioner unit. And, when the refrigerant in the sub condenser has reached the degree of supercooling or superheat, the temperature of the air passing through the condenser is varied, making it difficult to control the blown air temperature to be constant.

In addition, in the heat pump operation of the refrigerant circulating system of the vehicle air conditioning device as described above, the low-pressure condensed refrigerant in the outside and inside heat exchangers absorbs heat from the air. Therefore, depending on the ambient air temperature or indoor temperature (in other words, evaporation temperature of the low-pressure condensed refrigerant), water in the air causes condensation or frost on the heat exchangers and inhibits the heat exchangers from properly functioning, which is a problem necessary to be dealt with.

Accordingly, it is a good way to dispose the accumulator 16 at downstream of the first and second one-way valves 15, 21 for the countermeasure against these problems, as described above. Such a simple structure using the refrigeration cycle includes the means to solve the problem (unable to absorb heat from the ambient air during a low ambient temperature, causing a delay in the cycle rising). Specifically, it is possible to use the high-pressure, high-temperature refrigerant as a high-temperature heat source by absorbing heat from the device itself and enlarging a difference in the high and low pressures of refrigerant in the refrigeration cycle at an early point.

Moreover, by combining with the cooling water heating, the cooling water for the engine, for example, can warm the engine itself, making it possible to greatly shorten the engine warm-up time and greatly reduce the fuel amount largely consumed for the warming-up. Using the cooling water for heating the air in air conditioning of the vehicle cabin, a secondary effect that quick warming-up performance is attainable can be expected.

(First Example of First Embodiment)

The above first embodiment has described an example where the first and second water heat exchangers 26, 27 to flow the engine cooling water supplied from to the water jacket of the engine 3 to the heater core 8a and to return the engine cooling water from the heater core 8a to the water jacket of the engine 3, respectively, are provided and the second external heat exchanger 18a for refrigerant condensation is disposed between the first and second water heat exchangers 26, 27. However, the present invention should not be limited to such an example.

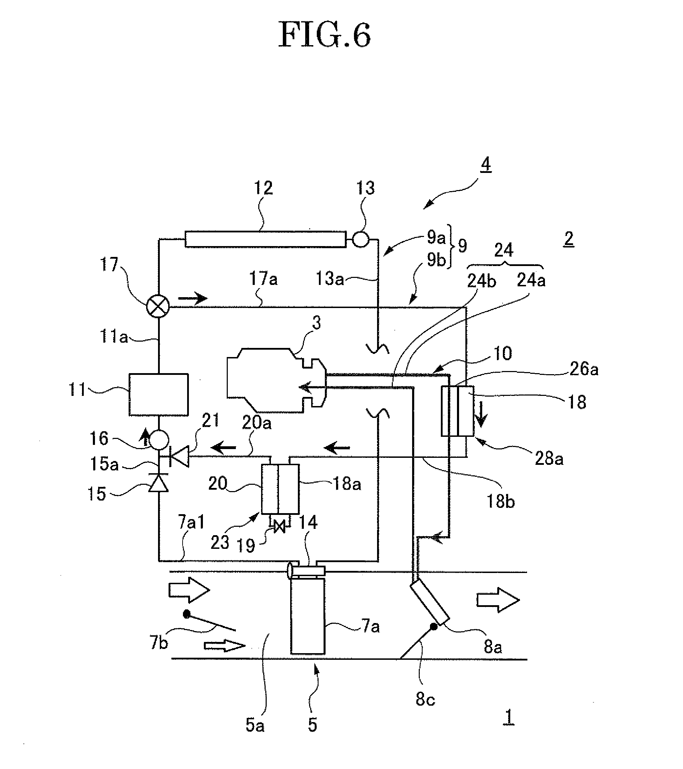

For example, the second water heat exchanger 27 in FIG. 1 is omissible and instead, the first external heat exchanger 18 can be configured to heat the engine cooling water in the water heat exchanger 26a as shown in FIG. 6. In this case the water heat exchanger 26a and the first external heat exchanger 18 constitute the heat exchange means 28a for heating the cooling water.

(Second Example of First Embodiment)

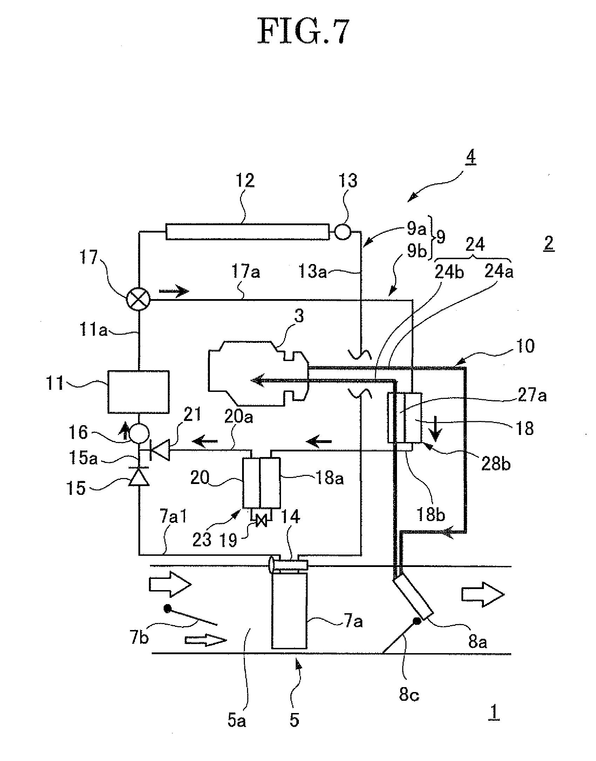

Further, the first water heat exchanger 26 in FIG. 1 is omissible and instead, the first external heat exchanger 18 can be configured to heat the engine cooling water in the water heat exchanger 27a as shown in FIG. 7. In this case the water heat exchanger 27a and the first external heat exchanger 18 constitute the heat exchange means 28b for heating the cooling water.

(Third Example of First embodiment)

In the above first embodiment the accumulator 16 is configured to be disposed at downstream of the first and second one-way valves 15, 21. However, the present invention should not be limited to such a configuration.

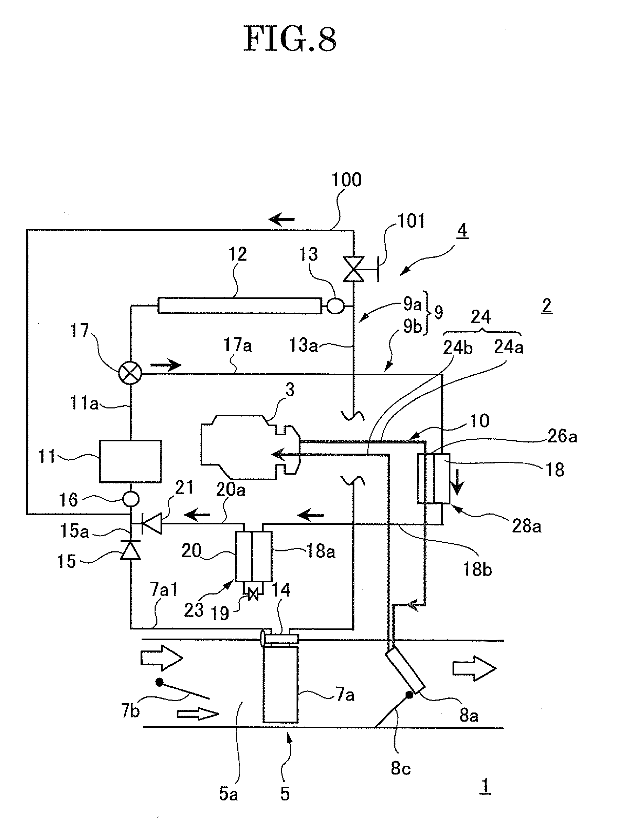

For example, as shown in FIG. 8 a second cooling refrigerant passage 13a branching to downstream (discharge side) of the liquid tank 13 of the condenser 12 and a refrigerant retrieval passage 100 can be additionally provided so that the refrigerant retrieval passage 100 is connected with the fourth air-cooling refrigerant passage 15a at upstream of the accumulator 16. An electromagnetic valve 101 is provided in the middle of the refrigerant retrieval passage 100. The rest of the structure is the same as that in the first example of the first embodiment in FIG. 6.

In FIG. 8 the refrigerant retrieval passage 100 is connected with the fourth air-cooling refrigerant passage 15a. However, it can be connected at any position as long as it is on the air heating cycle passage (to flow the refrigerant in the air heating) between the upstream of the accumulator 16 and the downstream of the accumulator 16, for example, on the passage between the second orifice 19 and the third external heat exchanger 20, the third bypass refrigerant passage 20a and else.

Then, in the refrigerant retrieval mode the three-way electromagnetic switching valve 17 makes the air cooling refrigerant passage 11 a and the condenser 12 communicate with each other, shuts off the communication between air cooling refrigerant passage 11a and the first bypass refrigerant passage 17a, and opens the electromagnetic valve 101 to operate the compressor 11. Thereby, the refrigerant remnant in the condenser 12 is absorbed and retrieved in the accumulator 16.

Such a structure can also deal with the deterioration in the heat exchange function of the heat exchangers described above.

The above first embodiment has described an example of a three-way valve using electromagnetic force as the three-way electromagnetic switching valve 17. However, the present invention should not be limited to such an example. It can be a three-way valve configured to be openable/closable using a pressure difference for example. Further, the compressor 11 uses the engine as a drive source. It can have a structure to be able to vary the discharge capacity by an external signal, vary the discharge capacity to achieve absorption pressure set by an internal control, or have a fixed discharge capacity. Also, the compressor 11 can be an electric compressor whose rotation rate is variably controllable.

The above first embodiment has described an example where a cooling subject is the engine of an engine driven Vehicle. However, the subject can be a driving motor, an inverter, a secondary battery or a fuel battery of a vehicle (electric vehicle) such as a hybrid vehicle or an electric automobile, for example.

In the vehicle (electric vehicle) such as a hybrid vehicle or an electric automobile, the cooling water is motor cooling water in the water jacket of a housing of an electric motor for driving a vehicle for cooling the motor. Also, in the electric vehicle the cooling water can be cooling water for a heat generator such as a power supply source (secondary battery) for supplying power to the electric motor, in addition to the motor cooling water.

Accordingly, in the vehicle (electric vehicle) such as a hybrid vehicle or an electric automobile, it is possible to rapidly increase the temperature of the motor cooling water used for heating the air in the vehicle cabin when the motor for driving the vehicle starts operating in a low ambient temperature, as in the above embodiment.

(Second Embodiment)

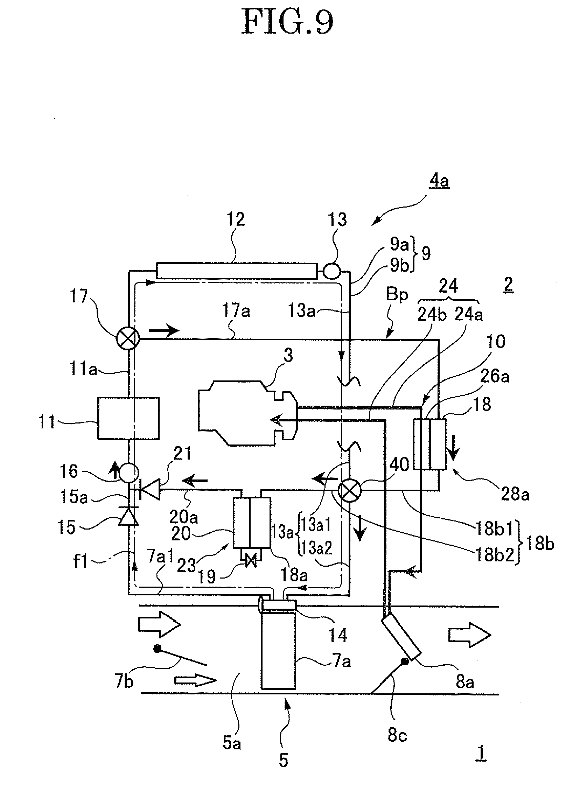

FIG. 9 schematically shows the structure of a vehicle air conditioning device according to a second embodiment of the present invention. Note that the same reference numbers are given to the same or like parts as those of the vehicle air conditioning device according to the first embodiment in FIG. 1. A description on an overlapping portion will be omitted.

A vehicle air conditioning device 4a in FIG. 9 according to the present embodiment also includes the refrigerant circulating passage arrangement 9 and the cooling water circulating passage arrangement 10. The refrigerant circulating passage arrangement. 9 includes the refrigerant circulating passage arrangement 9a to perform the refrigeration cycle for cooling the air and the second refrigerant circulating passage arrangement 9b to perform the refrigeration cycle for heating cooling water (heating cycle for air heating). The first cooling refrigerant circulating passage arrangement 9a is structured the same as that in the first embodiment.

The second refrigerant circulating passage arrangement 9b includes the compressor 11, three-way electromagnetic switching valve 17 connected with the first cooling refrigerant passage 11 a, a bypass refrigerant passage Bp connected with a refrigerant inlet (not shown) of the compressor 11 in parallel with the first external heat exchanger 12 and the evaporator 7a, and the refrigerant heat exchange means 23 disposed in the middle of the bypass refrigerant passage Bp. Note that in the present embodiment the heat exchange means 28a for heating the cooling water is comprised of the water heat exchanger 26a and the first external heat exchanger 18.

The refrigerant heat exchange means 23 is comprised of the first to third external heat exchangers 18, 18a, 20. In the present embodiment the first external heat exchanger 18 functions as a heat exchanger for refrigerant condensation (heating cooling water), the second external heat exchanger 18a as a heat exchanger for refrigerant condensation, and the third external heat exchanger 20 as a heat exchanger for refrigerant evaporation.

The refrigerant heat exchange means 23 comprises the second external heat exchanger 18a to release heat from the high-pressure liquid refrigerant condensed by the first external heat exchanger 18 to generate low-pressure liquid refrigerant, the second orifice 19 outside the vehicle cabin 1 to turn the high-temperature, high-pressure liquid refrigerant discharged (flowed) from the second external heat exchanger 18a to low-pressure liquid refrigerant, and the third external heat exchanger 20 for refrigerant evaporation to evaporate the low-pressure liquid refrigerant inflated by the second orifice 19.

The second and third external heat exchangers 18a are integrally provided so that the low-pressure liquid refrigerant flowing into the third external heat exchanger 20 from the second orifice 19 is heated and evaporated by the heat of the high-pressure liquid refrigerant in the second external heat exchanger 18a.

The bypass refrigerant passage Bp includes a first bypass refrigerant passage 17a connecting the three-way electromagnetic switching valve 17 and a refrigerant inlet (not shown) of the first external heat exchanger 18 and a second bypass refrigerant passage 18b to make (connect) a refrigerant outlet (not shown) of the first external heat exchanger 18 and a refrigerant inlet (not shown) of the second external heat exchanger 18a communicate with each other.

The second bypass refrigerant passage 18b includes a second bypass upstream refrigerant passage 18b1 connected at one end with the refrigerant outlet (not shown) of the first external heat exchanger 18 and a second bypass downstream refrigerant passage 18b2 connected at one end with the refrigerant inlet (not shown) of the second external heat exchanger 18a. Further, the bypass refrigerant passage Bp includes a third bypass refrigerant passage 20a connected at one end with the refrigerant outlet (not shown) of the third external heat exchanger 20.

As described above, the fourth air-cooling refrigerant passage 15a is connected at one end with the refrigerant outlet (not shown) of the first one-way valve 15, and the other end of the third bypass refrigerant passage 20a is connected to the middle of the fourth air-cooling refrigerant passage 15a. The refrigerant outlet (not shown) of the second one-way valve 21 is connected to a middle of the fourth air-cooling refrigerant passage 15a which is connected at the other end with the refrigerant inlet (not shown) of the compressor 11 via the accumulator 16.

Additionally, in the refrigerant circulating passage arrangement 9 for air cooling, a four-way electromagnetic switching valve 40 is interposed between the second upstream and downstream air cooling refrigerant passages 13a1, 13a2 and between the second bypass upstream and downstream refrigerant passages 18b1, 18b2.

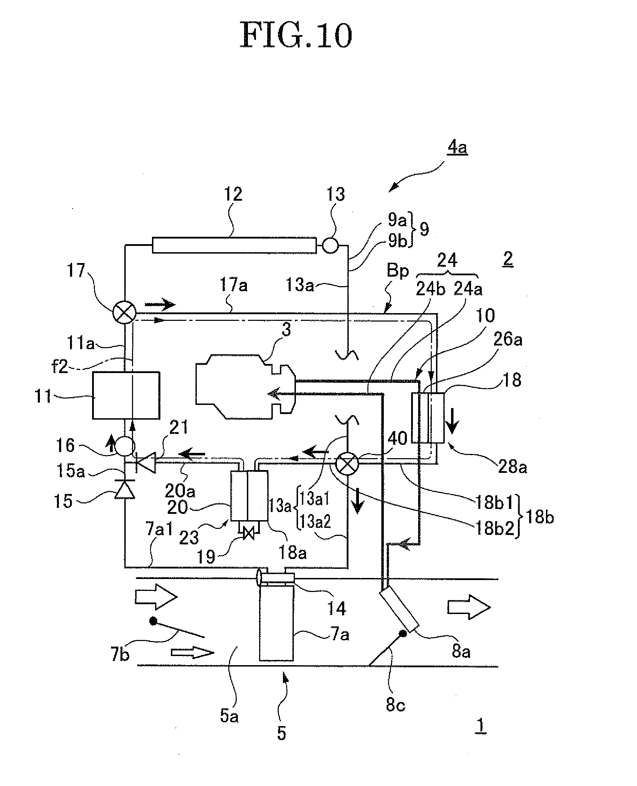

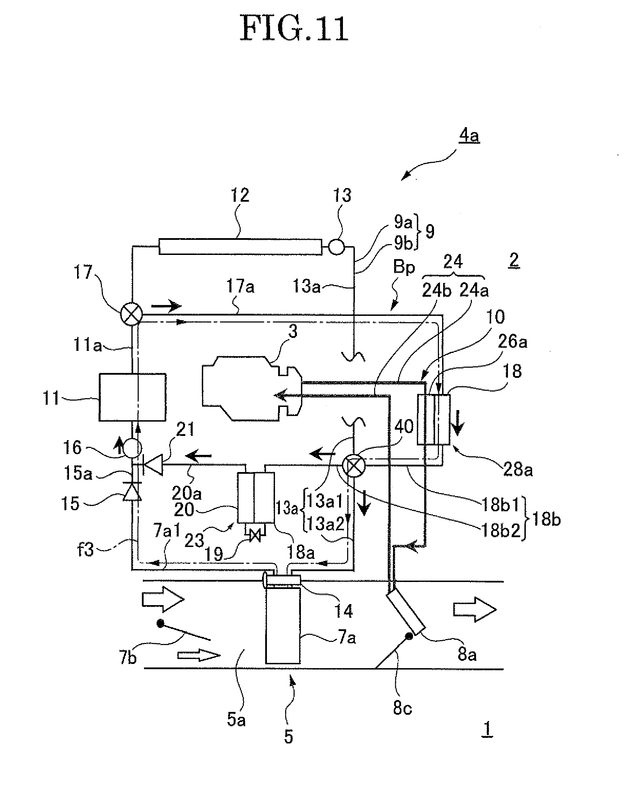

Herein, there are three refrigerant flows, that is, a first flow (first refrigerant flow) of liquid refrigerant through a first refrigerant passage f1 (FIG. 9) from the first external heat exchanger 12 into the first orifice 14 via the air cooling refrigerant passage 13a (second upstream and downstream air cooling refrigerant passages 13a1, 13a2) of the refrigerant circulating passage arrangement 9, a second flow (second refrigerant flow) of liquid refrigerant through a second refrigerant passage f2 (FIG. 10) front the first, external heat exchanger 18 to the refrigerant heat exchange unit 23 via the second bypass refrigerant passage 18b (second bypass upstream and downstream refrigerant passages 18b1, 18b2), and a third flow (third refrigerant flow) of liquid refrigerant through a third refrigerant passage f3 (FIG. 11) from the second external heat exchanger 18 to the first orifice 14 via the bypass upstream refrigerant passage 18b1 and the second downstream air cooling refrigerant passage 13b2 of the air cooling refrigerant circulating passage arrangement 9a. The four-way electromagnetic switching valve 40 is configured to switch among the first and third flows.

The refrigerant discharged from the compressor 11 flows through the three-way electromagnetic switching valve 17, first bypass refrigerant passage 17a, first external heat exchanger 18, second bypass upstream refrigerant, passage 18b1, four-way electromagnetic switching valve 40, second bypass downstream refrigerant passage 18b2, second external heat exchanger 18a, second orifice 19, third external heat exchanger 20, third bypass refrigerant passage 20a, second one-way valve 21, and accumulator 16 in this order. It then returns to the compressor 11 and circulates. Thus, a second refrigeration cycle is repeated.

The cooling water circulating passage arrangement 10 includes the cooling water circulating passage 24 through which the cooling water outlet and inlet (not shown) of the water jacket engine 3 are communicated each other via the heater core 8a. The cooling water circulating passage 24 includes the first cooling water passage 24a connecting (making communicate) the cooling water outlet (not shown) of the water jacket of the engine 3 and the cooling whaler inlet (not shown) of the heater core 8a, and the second cooling water passage 24b connecting (making communicate) the first cooling water outlet (not shown) connected with the cooling water inlet (not shown) of the heater core 8a and the cooling water inlet (not shown) of the water jacket of the engine 3. The first and second cooling water passages 24a, 24b are formed in a not-shown cooling water passage.

Further, the water heat exchanger 26a is disposed in the middle of the first cooling water passage 24a of the cooling water circulating passage 24 and integrally provided with the second external heat exchanger 18. According to the present embodiment the first external heat exchanger 18 and the water heat exchanger 26a constitute the heat exchange means 28a for heating the cooling water.

Thus, the water heat exchanger 26a is integrated with the first external heat exchanger 18 for refrigerant to transfer heat therebetween. By this heat transfer, heat from high-temperature, high-pressure compressed refrigerant in the first external heat exchanger 18 supplied from the compressor 11 heats the engine cooling water in the water heat exchanger 26a and the gaseous high-pressure refrigerant is deprived of heat and condensed to become liquid refrigerant by heating in the first external heat exchanger 18. The rest of the structure is the same as that of the above first embodiment.

Next, the operation of the vehicle air conditioning device 4a according to the present embodiment is described.

(Normal Air Cooling Operation)

Since the normal air cooling operation is the same as that in the first embodiment, a description thereof is omitted from the present embodiment to avoid redundancy.

(Normal Air Heating Operation in Low Ambient Temperature)

Upon turning on a not-shown ignition switch in the vehicle to start the engine 3, the water temperature sensor 30 (FIG. 3) detects the temperature of the engine cooling water in the water jacket of the engine 3 and outputs a temperature detection signal to the control unit 29 (FIG. 3).

Then, by turning on the air heating switch 32 (FIG. 3), the control unit 29 receives an ON signal as an instruction for the air-heating operation of the vehicle air conditioning device 4a and determines from the temperature detection signal of the water temperature sensor 30 whether or not the temperature of the engine cooling water has reached a required temperature (predetermined temperature) for heating the air in the vehicle cabin 1.

Determining that the temperature of the engine cooling water does not reach a required temperature (predetermined temperature) for heating the air in the vehicle cabin 1 in the engine start period in a low ambient temperature in winter or the like, the control unit 29 controls the operation of the three-way electromagnetic switching valve 17.

The control unit 29 controls the three-way electromagnetic switching valve 17 to shut off the refrigerant outlet (not shown) of the compressor 11 and the refrigerant inlet (not shown) of the condenser 12 as well as to make the refrigerant outlet (not shown) of the compressor 11 communicate with the first bypass refrigerant passage 17a of the bypass refrigerant passage Bp. In this state the refrigerant is prevented from flowing through the condenser12, liquid tank 13, first orifice 14, evaporator 7a and else, even if the compressor 11 is in operation.

Along with this, the control unit 29 controls the four-way electromagnetic switching valve 40 to make the second bypass upstream and downstream refrigerant passages 18b1, 18b2 communicate with each other and shut off the communication between the second upstream and downstream air cooling refrigerant passage 13a1, 13a2.

Moreover, the control unit 29 controls the door driver 8c1 of the heater unit 8 to open the upstream of the air path (not shown) of the heater core 8a with the mixing door 8c and controls the door driver 6c1 of the intake unit 6b to close the outer air inlet 6b1 of the intake unit 6b and open the inner air inlet 6b2.

Then, the control unit 29 operates the blower 6a to absorb the air in the vehicle cabin 1 from the inner air inlet 6b2. The absorbed air flows through the air passage 5a and a not-shown air path of the evaporator 7a and is blown into the vehicle cabin 1 from the air outlet 8e via the air path (not shown) of the heater unit 8 and the mixing chamber 8d. Since the refrigerant is not supplied to the evaporator 7a, the air blown from the blower 6a is not cooled in the evaporator 7a, passing through the air path (not shown) of the evaporator 7a even if the compressor 11 is in operation.

Further, the control unit 29 operates the compressor 11 to compress the refrigerant gas to high-temperature compressed refrigerant and discharge it to the first cooling refrigerant passage 11a. The compressed refrigerant flows through the three-way electromagnetic switching valve 17, first bypass refrigerant passage 17a of the bypass refrigerant passage Bp, first external heat exchanger 18, second bypass upstream refrigerant passage 18b1, four-way electromagnetic switching valve 40, second bypass downstream refrigerant passage 18b2, second external heat exchanger 18a, second orifice 19, third external heat exchanger 20, third bypass refrigerant passage 20a, second one-way valve 21, accumulator 16 and else in this order, and returns to the compressor 11 and circulates.

Here, the compressed refrigerant is deprived of heat and becomes condensed into high-pressure liquid refrigerant in the first external heat exchanger 18. The liquid refrigerant is inflated by the second orifice19 into low pressure liquid refrigerant and flows into the second external heat exchanger 18a. Heat from the liquid refrigerant having flowed into the second external heat exchanger 18a is absorbed into the refrigerant in the third external heat exchanger 20 so that the pressure of the liquid refrigerant supplied to the second orifice 19 can be lowered.

The liquid refrigerant in a pressure is inflated and depressurized in the second orifice 19, flows into the third external heat exchanger 20, and is evaporated therein absorbing heat from the second external heat exchanger 18a to become refrigerant gas. The evaporated refrigerant gas returns to the compressor 11 via the third bypass refrigerant passage 20a, second one-way valve 21, and accumulator 16.

Further, the engine cooling water in the water jacket of the engine 3 is discharged therefrom by a not-shown water pump and supplied to the water heat exchanger 26a. Then, the engine cooling water flows into the heater core 8a via the water heat exchanger 26a, returns to the water jacket of the engine 3 from the heater core 8a and circulates.

Along with this, the external heat exchanger 18 and the water heat exchanger 26a transfers heat therebetween when the compressed refrigerant flows in the first external heat exchanger 18, to heat the engine cooling water in the water heat exchanger 26a flowing to the heater core 8a. The engine cooling water heated by the first external heat exchanger 18 and the water heat exchanger 26a is supplied to the heater core 8a to heat the air flowing in the air path (not shown) of the heater core 8a. The warmed air is blown from the air outlet 8 to the vehicle cabin 1 and warm up the air in the vehicle cabin 1.

(Dehumidified Air Heating Operation)

Upon receiving an operation signal (ON signal) from a dehumidifying switch 33 (FIG. 3), the control unit 29 controls the four-way electromagnetic switching valve 40 to change the flow of the refrigerant in the normal air heating operation.

Specifically, receiving the operation signal (ON signal) from the dehumidifying switch 33, the control 1 unit 29 controls the four-way electromagnetic switching valve 40 to make the second bypass upstream refrigerant passage 18b1 communicate with the second downstream refrigerant passage 13a2, shut off the communication between the second bypass upstream and downstream refrigerant passages 18b1, 18b2 and shut off the communication between the second upstream and downstream air cooling refrigerant passages 13a1, 13a2, to thereby flow the liquid refrigerant from the first external heat exchanger 18 into the first orifice 14 via the second bypass upstream refrigerant passage 18b1 and the third downstream refrigerant passage 13a2. Flowing into the first orifice 14, the high-pressure liquid refrigerant is inflated (depressurized) therein to low-pressure liquid refrigerant.

The depressurized, condensed refrigerant is supplied to the evaporator 7a in the vehicle cabin 1 and blown from the blower 6a. Also, it absorbs heat from the air flowing through a not-shown air path of the evaporator 7a and reduces the temperature of the air. Here, water contained in the air is condensed onto the outer face of the heat exchanger of the evaporator 7a and dehumidified. The dehumidified air is heated (warmed), passing through a not-shown air path in the heater core 8a, and blown out to the vehicle cabin 1 from the air outlet 8e to heat the air in the vehicle cabin 1.

Meanwhile, flowing into the evaporator 7a from the first orifice 14, the liquid refrigerant (refrigerant liquid) is evaporated to gaseous refrigerant (refrigerant gas) at the time the air in the cabin is dehumidified. The refrigerant (refrigerant gas) is returned to circulate via the third cooling refrigerant passage 7a1, first one-way valve 15, fourth air-cooling refrigerant passage 15a, accumulator 16 and else to the compressor 11 and compressed thereby.

(Different Example of second embodiment)

The above second embodiment has described an example where the engine cooling water discharged from the water jacket of the engine 3 is supplied to the heater core 8a via the water heat exchanger 26a and can be heated by the first external heat exchanger 18 when flowing in the water heat exchanger 26a. The present invention should not be limited to such an example.

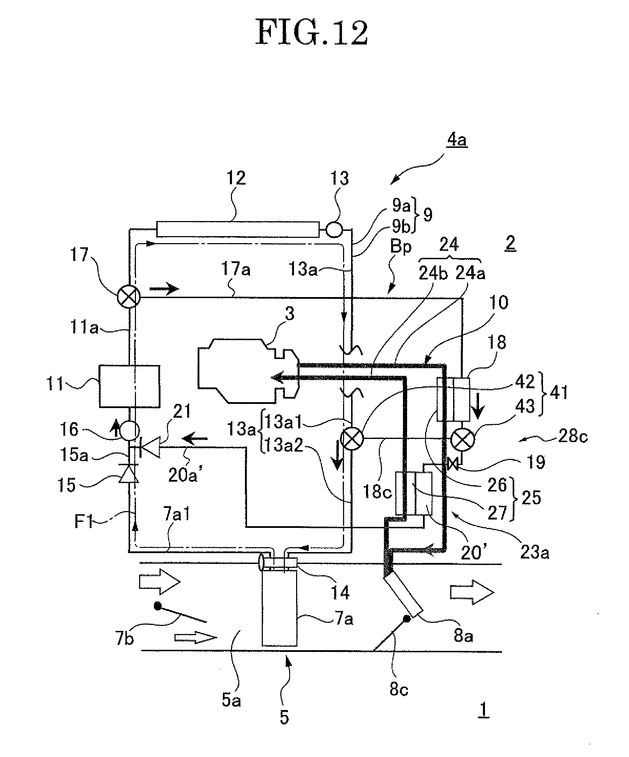

For example, FIG. 12 shows another example of the second embodiment, the vehicle air conditioning device 4a comprising the cooling water circulating passage 24 to make the cooling water outlet (not shown) and the cooling water inlet (not shown) of the water jacket engine 3 communicate with each other via the heater core 8a so that the water heat exchange unit 25 is provided in the middle of the cooling water circulating passage 24,

The water heat exchange unit 25 includes the first water heat exchanger 26 through which the engine cooling water is supplied from the water jacket of the engine 3 to the heater core 8a and the second water heat exchanger 27 through which the engine cooling water is returned to the water jacket of the engine 3 from the heater core 8a. The device in FIG. 12 omits including the second external heat exchanger 18a in FIG. 9, and includes a third external heat exchanger 20' instead of the third external heat exchanger 20 in FIG. 9.

According to the present embodiment, the first external heat exchanger 18 and the water heat exchange unit 25 (first and second water heat exchangers 26, 27) constitute a heat exchange means 28c for heating the cooling water. The first external heat exchanger 18 and the third external heat exchanger 20' constitute the refrigerant heat exchange means 23a.

Further, the first water heat exchanger 26 and the first external heat exchanger 18 are integrally provided to transfer heat therebetween and the first external heat exchanger 18 and the third external heat exchanger 20' are integrally provided to transfer heat therebetween.

In this example, the third bypass refrigerant passage 20a' is the one to make the third external heat exchanger 20 and the second one-way valve 21 communicate with each other in replace of the third bypass refrigerant passage 20a in FIG. 9.

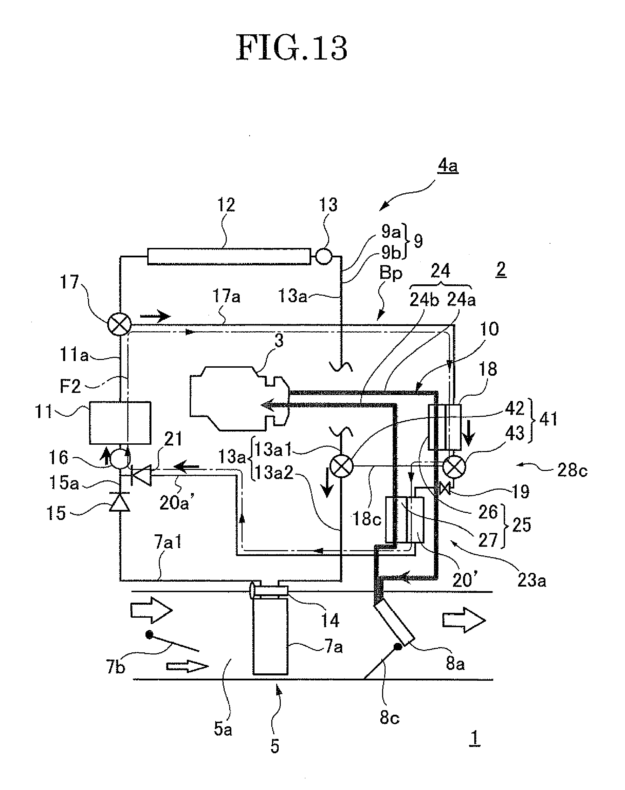

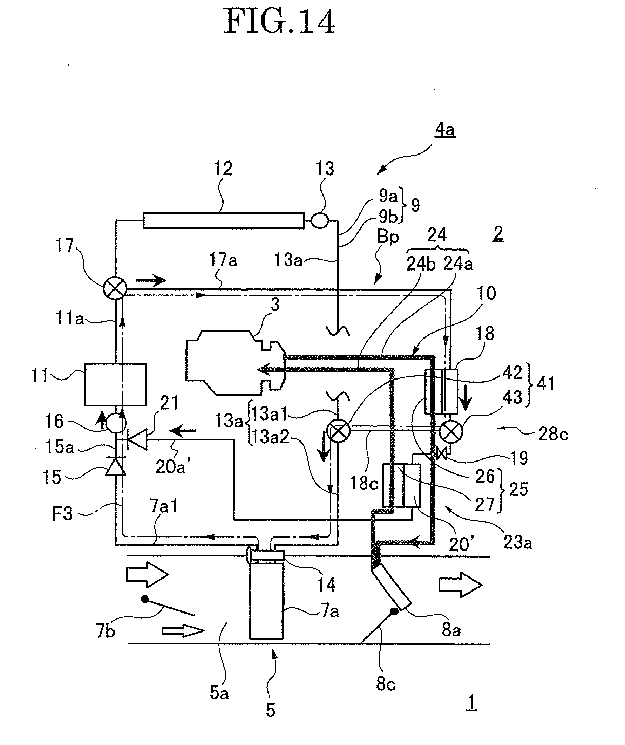

Further, as shown in FIG. 12, the first refrigerant passage (F1) is set to flow the refrigerant from the second upstream air cooling refrigerant passage 13a1 to the second downstream air cooling refrigerant passage 13a2 to allow the refrigerant to be circulated by the compressor 11, At shown in FIG. 13, the second refrigerant passage (F2) is set to flow the refrigerant from the first external heat exchanger 18 to the third external heat exchanger 20' to allow the refrigerant to be circulated by the compressor 11. As shown in FIG. 14, the third refrigerant passage (F3) is set to flow the refrigerant discharged from the first external heat exchanger 18 to the second downstream air cooling refrigerant passage 13a2. to allow the refrigerant to be circulated by the compressor 11.

A part of the first refrigerant passage F1 is formed as a first liquid refrigerant passage in the second upstream and downstream air cooling refrigerant passages 13a1, 13a2 while a part of the second refrigerant passage F2 is formed as a second liquid refrigerant passage between the first external heat exchanger 18 and the third external heat exchanger 20'.

The device additionally comprises a refrigerant passage 18c to connect the refrigerant outlet (not shown) of the first external heat exchanger 18 and second upstream and downstream air cooling refrigerant passages 13a1, 13a2. A part of the third refrigerant passage F3 is formed as a third liquid refrigerant passage in the refrigerant passage 18c. The second orifice 19 is formed in the middle of the second liquid refrigerant passage.

The device further comprises an electromagnetic switching valve 41 to switch among a fist flow from the condenser 12 to the first orifice 14, a second flow from the first external heat exchanger 18 to the third external heat exchanger 20', and a third flow from the first external heat exchanger 18 to the first orifice 14.

The electromagnetic switching valve 41 includes a first electromagnetic switching valve 42 disposed among the refrigerant passage 18c and the second upstream and downstream air cooling refrigerant passages 13a1, 13a2 to make the second downstream air cooling refrigerant passage 13a2 communicate with one of the air cooling refrigerant passage 13a1 and the refrigerant passage 18c. It also includes a second electromagnetic switching valve 43 disposed among the refrigerant inlet (not shown) of the first three-way electromagnetic switching valve 42, refrigerant passage 18c and the refrigerant, inlet (not shown) of the second orifice 19 to make the refrigerant outlet (not shown) of the first external heat exchanger 18 communicate with one of the refrigerant inlet (not shown) of the second orifice 19 and the refrigerant passage 18c.

The second and third electromagnetic switching valves 42, 43 are controlled by the control unit 29 to switch among the first flow from the condenser 12 to the first orifice 14, the second flow from the first external heat exchanger 18 to the third external heat exchanger 20', and the third flow from the first external heat exchanger 18 to the first orifice 14.

Next, the operation of the vehicle air conditioning device 4a in the first example of the present embodiment is described.

(Normal Air Cooling Operation)

Since the normal air cooling operation is the same as that in the first embodiment, a description thereof is omitted from the present embodiment to avoid redundancy.

(Air Heating Operation in Low Ambient Temperature)

Upon turning on a not-shown ignition switch in the vehicle to start the engine 3, the water temperature sensor 30 (FIG. 3) detects the temperature of the engine cooling water in the water jacket of the engine 3 and outputs a temperature detection signal to the control unit 29 (FIG. 3).

Then, by turning on the air heating switch 32 (FIG. 3), the control unit 29 receives an ON signal as an instruction for the air-heating operation of the vehicle air conditioning device 4a and determines from the temperature detection signal of the water temperature sensor 30 whether or not the temperature of the engine cooling water has reached a required temperature (predetermined temperature) for heating the air in the vehicle cabin 1.

Determining that the temperature of the engine cooling water does not reach a required temperature (predetermined temperature) for heating the air in the vehicle cabin 1 in the engine start period in a low ambient temperature during winter or else, the control unit 29 controls the operation of the three-way electromagnetic switching valve 17.

The control unit 29 controls the three-way electromagnetic switching valve 17 to shut off the refrigerant outlet (not shown) of the compressor 11 or the first cooling refrigerant passage 11a and the refrigerant inlet (not shown) of the condenser 12 as well as to make the refrigerant outlet (not shown) of the compressor 11 or the first cooling refrigerant passage 11a communicate with the first bypass refrigerant passage 17a of the bypass refrigerant passage Bp. In this state the refrigerant is prevented from flowing through the condenser12, liquid tank 13, first orifice 14, evaporator 7a and else, even if the compressor 11 is operated.

Along with this, the control unit 29 controls the second electromagnetic switching valve 43 to shut off the communication between the refrigerant outlet (not shown) of the first external heat exchanger 18 and the refrigerant passage 18c and make the refrigerant outlet (not shown) of the first external heat exchanger 18 and the second orifice 19 communicate with each other.

Moreover, the control unit 29 controls the door driver 8c 1 of the heater unit 8 to open the upstream of the air path (not shown) of the heater core 8a with the mixing door 8c and controls the door driver 6c1 of the intake unit 6b to close the outer air inlet 6b1 of the intake unit 6b and open the inner air inlet 6b2.

Then, the control unit 29 operates the blower 6a to absorb the air in the vehicle cabin 1 from the inner air inlet 6b2. The absorbed air flows through the air passage 5a and a not-shown air path of the evaporator 7a and is blown into the vehicle cabin 1 from the air outlet 8e via the air path (not shown) of the heater unit 8 and the mixing chamber 8d. Since the refrigerant is not supplied to the evaporator 7a as above, the air blown from the blower 6a is not cooled in the evaporator 7a, passing through the air path (not shown) of the evaporator 7a even if the compressor 11 is operated.

Further, by driving the engine 3, the engine cooling water in the water jacket of the engine 3 is discharged therefrom by a not-shown water pump and supplied to the first water heat exchanger 26. Then, the engine cooling water flows into the heater core 8a via the first water heat exchanger 26, returns to the water jacket of the engine 3 from the heater core 8a and circulates.

Further, the control unit 29 operates the compressor 11 to compress the refrigerant gas to high-temperature compressed refrigerant and discharge it to the first air-cooling refrigerant, passage 11a. The compressed refrigerant flows through the three-way electromagnetic switching valve 17, first bypass refrigerant passage 17a of the bypass refrigerant passage Bp, first external heat exchanger 18, second electromagnetic switching valve 43, second orifice 19, third external heat exchanger 20', third bypass refrigerant passage 20a', second one-way valve 21, accumulator 16 and else in this order, and returns to the compressor 11 and circulates.

Here, the high-temperature, high-pressure compressed refrigerant releases heat in the first external heat exchanger 18 to heat the engine cooling water therein flowing to the heater core 8a. The engine cooling water heated in the first external heat exchanger 18 and the first water heat exchanger 26 is supplied to the heater core 8a and heats the air flowing in the air path (not shown) of the heater core 8a. The warmed air is blown into the vehicle cabin 1 from the air outlet 8e to warm up the air therein. Along with this, the high-temperature, high-pressure liquid refrigerant releases heat, flowing in the first external heat exchanger 18 and becomes condensed to high-pressure liquid refrigerant. This liquid refrigerant is inflated by the second orifice 19 to become low-pressure liquid refrigerant.

The liquid refrigerant with a lowered pressure flows into the third external heat exchanger 20' and flows out of the heater core 8a. Then, it is heated by the engine cooling water flowing in the second water heat exchanger 27 and evaporated therein absorbing heat from the third external heat exchanger 20' to become refrigerant gas. The evaporated refrigerant gas is returned to the compressor 11 via the third bypass refrigerant passage 20a', second one-way valve 21, and accumulator 16.

(Dehumidified Air Heating Operation)

Upon receiving an operation signal (ON signal) from the dehumidifying switch 33 (FIG. 3), the control unit 29 controls the first and second electromagnetic switching valves 42, 43 to change the flow of the refrigerant in the normal air heating operation.

Specifically, receiving the operation signal (ON signal) from the dehumidifying switch 33, the control unit 29 controls the first electromagnetic switching valve 42 to shut off the communication between the second upstream and downstream refrigerant passages 13a1, 13a2, and controls the second electromagnetic switching valve 43 to make the refrigerant passage 18c and the second downstream air cooling refrigerant passage 13a2 communicate with each other.

Along with this, the control unit 29 controls the second electromagnetic switching valve 43 to shut off the communication between the refrigerant outlet (not shown) of the first external heat exchanger 18 and the second orifice 19 and make the refrigerant outlet (not shown) of the first external heat exchanger 18 and the refrigerant passage 18c communicate with each other.

Thereby, the liquid refrigerant from the first external heat exchanger 18 is flowed into the first orifice 14 via the second electromagnetic switching valve 43, the refrigerant passage 18c, the first electromagnetic switching valve 42 and the third downstream refrigerant passage 13a2. Flowing into the first orifice 14, the high-pressure liquid refrigerant is inflated (depressurized) thereby to low-pressure liquid refrigerant.

The depressurized condensed refrigerant is supplied to the evaporator 7a in the vehicle cabin 1 and blown from the blower 6a. Also, it absorbs heat from the air flowing through a not-shown air path of the evaporator 7a and reduces the temperature of the air. Here, water contained in the air is condensed onto the outer face of the heat exchanger of the evaporator 7a and dehumidified. The dehumidified air is heated (warmed), passing through a not-shown air path in the heater core 8a, and blown out to the vehicle cabin 1 from the air outlet 8e to heat the air in the vehicle cabin 1.

Meanwhile, flowing into the evaporator 7a from the first orifice 14, the liquid refrigerant (refrigerant liquid) is evaporated to gaseous refrigerant (refrigerant gas) at the time the air in the cabin is dehumidified. The refrigerant (refrigerant gas) is returned to circulate via the third cooling refrigerant passage 7a1, first one-way valve 15, fourth air-cooling refrigerant passage 15a, and accumulator 16 to the compressor 11 and compressed thereby.

As described above, the vehicle air conditioning device 4a according to the second embodiment includes the refrigerant circulating passage arrangement 9 for air cooling through which the refrigerant is circulated trough the compressor 11 driven by the engine, condenser 12 for refrigerant condensation outside the vehicle cabin 1, first orifice 14, evaporator 7a for air cooling and liquid refrigerant evaporation in this order, and the cooling water circulating passage arrangement 10 for air heating through which the engine cooling water is circulated between the water jacket of the engine 3a and the heater core in the vehicle cabin.

Further, the vehicle air conditioning device 4a includes the three-way electromagnetic switching valve 17 to switchably make the refrigerant discharge opening of the compressor 11 communicate with one of the condenser 12 and the bypass passage (in the first bypass refrigerant passage 17a) provided in parallel with the bypass passage connected with the compressor 11 in parallel with the condenser 12 and the evaporator 7a.

The heat exchange means 23a for refrigerant comprises the first external heat exchanger 18 for refrigerant condensation provided in the middle of the bypass passage (in the first bypass refrigerant passage 17a) and the second and third external heat exchangers 18a, 20 to evaporate the liquid refrigerant from the first external heat exchanger 18 and return it to the compressor 11. Moreover, the water heat exchange unit 25 comprises the water heat exchanger (at least one of the first and second water heat exchangers 26, 27) to flow the engine cooling water between the water jacket of the engine 3 and the heater core 8a, and the first external heat exchanger 18 is configured to be able to heat the engine cooling water in the water heat exchanger (at least one of the first and second water heat exchangers 26, 27). The four-way electromagnetic switching valve 40 is provided to switch among the first flow from the condenser 12 and the first orifice 14, the second flow from the first external heat exchanger 18 to the heat exchange means 23 for refrigerant, and the third flow from the first external heat exchanger 18 to the first orifice 14.

As configured above, the simple structure can rapidly increase the temperature of the engine cooling water used for heating the air in the vehicle cabin in the engine start period in a low ambient temperature. Also, it can perform dehumidifying operation by switching the flow to the third flow with the four-way electromagnetic switching valve 40.

In the vehicle air conditioning device 4a according to the present embodiment, the four-way electromagnetic switching valve 40 is disposed in the middle of the first passage between the condenser 12 and the first orifice 14 and the second passage from the first external heat exchanger 18 to the heat exchange means 23 for refrigerant.

With such a configuration, the device can perform dehumidifying operation by switching the flow to the third flow with the four-way electromagnetic switching valve 40.

In the vehicle air conditioning device 4a according to the present embodiment the first water heat exchanger 26 is provided in the middle of the passage to flow the engine cooling water from the water jacket of the engine 3 to the heater core 8a.

With such a configuration, the device can rapidly increase the temperature of the engine cooling water flowing from the water jacket of the engine 3 to the heater core 8a and used for heating the air in the vehicle cabin in the engine start period in a low ambient temperature.

In the vehicle air conditioning device 4a according to the present embodiment, the water heat exchange unit 25 comprises the first water heat exchanger 26 provided in the middle of the passage to flow the engine cooling water from the water jacket of the engine 3 to the heater core 8a and the second water heat exchanger 27 provided in the middle of the passage to flow the engine cooling water from the heater core 8a to the water jacket of the engine 3. Also, the engine cooling water in the first water heat exchanger 26 is heatable by the first external heat exchanger 18 while that in the second water heat exchanger 27 can heat the refrigerant in the heat exchange means 23a for refrigerant. Further, the third passage is provided to make the first passage from the condenser 12 to the first orifice 14 communicate with the second passage from the first external heat exchanger 18 to the heat exchange means 23a for refrigerant. In addition, the electromagnetic switching valve 41 includes the first electromagnetic switching valve 42 interposed between the middle of the first passage and the third passage and the second electromagnetic switching valve 43 interposed between the middle of the second passage and the third passage.

With such a configuration, the device can rapidly increase the temperature of the engine cooling water flowing from the water jacket of the engine 3 to the heater core 8a to heat the air in the vehicle cabin in the engine start period in a low ambient temperature, as well as to accelerate the evaporation of the liquid refrigerant by heating the refrigerant in the refrigerant heat exchange means 23 with the engine cooling water flowing from the heater core 8a to the water jacket of the engine 3.

Moreover, in the vehicle air conditioning device 4a according to the present embodiment the accumulator 16 is disposed at downstream of the first and second one-way valves 15, 21 by way of example. However, the present invention should not be limited to such an example. The accumulator 16 can be disposed at downstream of the first one-way valve 15 and at upstream of a connecting portion of the third bypass refrigerant passage 20a on which the second one-way valve 21 is disposed and the fourth air-cooling refrigerant passage 15a, for example. Alternatively, it can be disposed at upstream of the second one-way valve 21.

Thus, by disposition of the accumulator 16, the liquefied refrigerant gas occurring in the engine start period or in a low temperature can be accumulated in the accumulator 16. This makes it possible to reduce loss of the heat exchange between the first and second water heat exchangers 26, 27 constituting the water heat exchange unit 25 and the first external heat exchanger 18 and to rapidly increase the temperature of the engine cooling water and quickly and comfortably warm up the vehicle cabin.

(Third Embodiment)

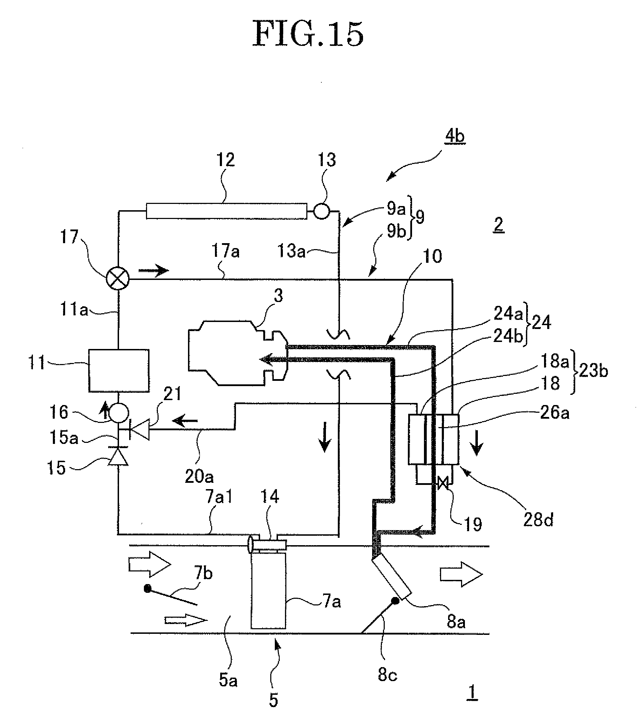

FIG. 15 schematically shows the structure of a vehicle air conditioning device according to a third embodiment of the present invention. Note that the same reference numbers are given to the same or like parts as those of the vehicle air conditioning device according to the first embodiment in FIG. 1. A description on an overlapping portion will be omitted.

A vehicle air conditioning device 4b in FIG. 15 according to the present embodiment also includes the refrigerant circulating passage arrangement 9 and the cooling water circulating passage arrangement 10. The refrigerant circulating passage arrangement 9 includes the first refrigerant circulating passage arrangement 9a to perform air cooling refrigeration cycle (air cooling cycle) and the second refrigerant circulating passage arrangement 9b to perform refrigeration cycle for heating cooling water (air heating cycle). The refrigerant circulating passage arrangement 9a is structured the same as that in the first embodiment.

The second refrigerant circulating passage arrangement 9b includes the compressor 11, the three-way electromagnetic switching valve 17 interposed in the middle of the first air-cooling refrigerant passage l1a, the first bypass refrigerant passage 17a connected at one end with the three-way electromagnetic switching valve 17, the first external heat exchanger 18 for refrigerant condensation (heating cooling water) disposed outside the vehicle cabin 1 and connected at a refrigerant inlet (not shown) with the other end of the first bypass refrigerant passage 17a, and the second orifice 19 outside the vehicle cabin 1 connected with a refrigerant outlet (not shown) of the first external heat exchanger 18.

Further, the second refrigerant circulating passage arrangement 9b includes the second external heat exchanger 18a for refrigerant evaporation supplied with the refrigerant inflated by the second orifice 19, third bypass refrigerant passage 20a connected at one end with the refrigerant outlet (not shown) of the second external heat exchanger 18a, second one-way valve 21 connecting the other end of the third bypass refrigerant passage 20a and the middle of the fourth air-cooling refrigerant passage 15a connected with the refrigerant outlet (not shown) of the first one-way valve 15, and accumulator 16.

The refrigerant discharged from the compressor 11 flows through the three-way electromagnetic switching valve 17, first bypass refrigerant passage 17a, first external heat exchanger 18, second orifice 19, second external heat exchanger 18a, third bypass refrigerant passage 20a, second one-way valve 21, and accumulator 16 in this order, and then is returned to the compressor 11 to circulate. The second refrigeration cycle is thus repeated.

In the first and third bypass refrigerant passages 17a, 20a, a bypass passage is formed to communicate (connect) with the compressor 11 in parallel with the condenser 12 and the evaporator 7a. The heat exchange means 28d for heating cooling water comprising the first and second external heat exchangers 18, 18a and the water heat exchanger 26a is disposed in the middle of this bypass passage. Also, the first and second external heat exchangers 18, 18a constitute the refrigerant heat exchange means 23b in the present embodiment.

The cooling water circulating passage arrangement 10 includes the passage in the water jacket of the engine 3 and the cooling water circulating passage 24 to flow into the heater core 8a the cooling water discharged from the cooling water outlet (not shown) of the water jacket of the engine 3 by a not-shown water pump and return the cooling water to the passage in the water jacket of the engine 3.

The cooling water circulating passage 24 includes the first cooling water passage 24a connecting (making communicate) the cooling water outlet (not shown) of the water jacket of the engine 3 and the cooling water inlet (not shown) of the heater core 8a, and the second cooling water passage 24b connecting (making communicate) the first cooling water outlet (not shown) connected with the cooling water inlet (not shown) of the heater core 8a and the cooling water inlet (not shown) of the water jacket of the engine 3. Also, the water heat exchanger 26a is disposed in the middle of the first cooling water passage 24a.

Further, the water heat exchanger 26a is disposed between the first and second heat exchangers 18,18a and integrally provided therewith so as to be able to transfer heat. By the heat transfer, the engine cooling water in the water heat exchanger 26a is heated by heat from the high-temperature, high-pressure compressed refrigerant supplied to the first external heat exchanger 18 from the compressor 11. At the same time, the heated gaseous high-pressure refrigerant is deprived of heat and condensed in the first external heat exchanger 18 to become liquid refrigerant.

Meanwhile, the low-pressure liquid refrigerant flowing from the second orifice 19 into the second external heat exchanger 18a is heated by the engine cooling water in the first water heat exchanger 26 and evaporated in the second external heat exchanger 18a to become refrigerant gas. The rest of the structure is the same as that of the vehicle air conditioning device in the first embodiment.

Next, the operation of the vehicle air conditioning device 4b according to the present embodiment is described.

(Normal Air cooling Operation)

The normal air cooling operation is the same as that in the first embodiment so that a description on an overlapping portion is omitted.

(Air Heating Operation in Low Ambient Temperature)

At start, of the engine 3 by turning on a not-shown ignition switch of the vehicle, the water temperature sensor 30 detects the temperature of the engine cooling water of the water jacket of the engine 3 and outputs a temperature detection signal to the control unit 29 (FIG. 3).

Then, the air heating switch 32 (FIG. 3) is turned on and an ON signal is input to the control unit 29 as an instruction for air heating of the vehicle air conditioning device 4b. The control unit 29 determines from the temperature detection signal of the water temperature sensor 30 whether or not the temperature of the engine cooling water has reached a required temperature (predetermined temperature) for heating the air in the vehicle cabin 1.

Determining that the temperature of the engine cooling water has reached a required temperature (predetermined temperature) for heating the air in the vehicle cabin 1 in the engine starting period in a low ambient temperature in winter or the like, the control unit 29 controls the three-way electromagnetic switching valve 17 to operate.

The control unit 29 controls the three-way electromagnetic switching valve 17 to shut off the refrigerant outlet (not shown) of the compressor 11 and the refrigerant inlet (not shown) of the condenser 12 and make the refrigerant outlet (not shown) of the compressor 11 communicate with the first bypass refrigerant passage 17a as the bypass passage. In this manner, even with the compressor 11 in operation, the refrigerant is prevented from flowing through the condenser 12, liquid tank 13, first orifice 14, evaporator 7a and else,

Then, the control unit 29 controls the door driver 8c1 to open the upstream of the air path (not shown) of the heater core 8a with the mixing door 8c and controls the door driver 6c1 of the intake unit 6b to close the outer air inlet 6b1 of the intake unit 6b and open the inner air inlet 6b2.

Next, the control unit, 29 operates the blower 6a to absorb the air in vehicle cabin 1 from the inner air inlet 6b2. The absorbed air flows into the air passage 5a and the not-shown air path of the evaporator 7a and is blown out in the vehicle cabin 1 from the air outlet 8e via the air path of the heater unit 8 (not shown) and the mixing chamber 8d. Even with the compressor 11 in operation, the refrigerant is not supplied to the evaporator 7a as described above, so that the air from the blower 6a passing through the air path (not shown) of the evaporator 7a cannot be cooled by the evaporator 7a.

The control unit 29 then operates the compressor 11 to compress the refrigerant gas and discharge high-temperature, high-pressure compressed refrigerant to the first air-cooling refrigerant passage 11 a. The compressed refrigerant flows through the three-way electromagnetic switching valve 17, first bypass refrigerant passage 17a, first external heat exchanger 18, second bypass refrigerant passage 18b, second external heat exchanger 18a, second orifice 19, third external heat exchanger 20, third bypass refrigerant passage 20a, second one-way valve 21, and accumulator 16 in this order, and is returned to the compressor 11 to circulate.

The compressed refrigerant is deprived of heat and condensed in the first external heat exchanger 18 to become high-pressure liquid refrigerant. The liquid refrigerant is inflated by the second orifice 19 to become low-pressure liquid refrigerant and then flows into the second external heat exchanger 18a and is evaporated thereby to refrigerant gas. The evaporated refrigerant gas is returned to the compressor 11 via the third bypass refrigerant passage 20a, second one-way valve 21, and accumulator 16.

Also, the engine cooling water from the water jacket of the engine 3 flows into the heater core 8a and is returned to the water jacket of the engine 3 to circulate.

Along with this, flowing in the first external heat exchanger 18, heat from the compressed refrigerant is transferred between the first external heat exchanger 18 and the water heat exchanger 26a to heat the engine cooling water in the water heat exchanger 26a flowing to the heater core 8a. Also, the heat therefrom is transferred between the water heat exchanger 26a and the second external heat exchanger 18a to heat the liquid refrigerant flowing in the second external heat exchanger 18a with the engine cooling water in the water heat exchanger 26a.

The engine cooling water heated in the first external heat exchanger 18 and the first water heat exchanger 26a is supplied to the heater core 8a and heats the air flowing through the air path (not shown) of the heater core 8a. The heated air is blown out in the vehicle cabin 1 from the air outlet 8e to heat there.

The compressed refrigerant in the first external heat exchanger 18 heats the liquid refrigerant flowing into the second external heat exchanger 18a via the engine cooling water in the water heat exchanger 26a to accelerate evaporation of the low-pressure liquid refrigerant therein.

(Example of Third Embodiment)

The third embodiment has described an example where the water heat exchanger 26a is provided to flow the engine cooling water supplied from the water jacket of the engine 3 to the heater core 8a, transfer/receive heat to/from the first and second external water heat exchangers 18, 18a and heat the engine cooling water in the water heat exchanger 26a by the heat from the compressed refrigerant in the first external heat exchanger 18 for refrigerant condensation and heat the liquid refrigerant flowing into the second external heat exchanger 18a for refrigerant evaporation via the engine cooling water in the water heat exchanger 26a. However, the present invention should not be limited to such an example.

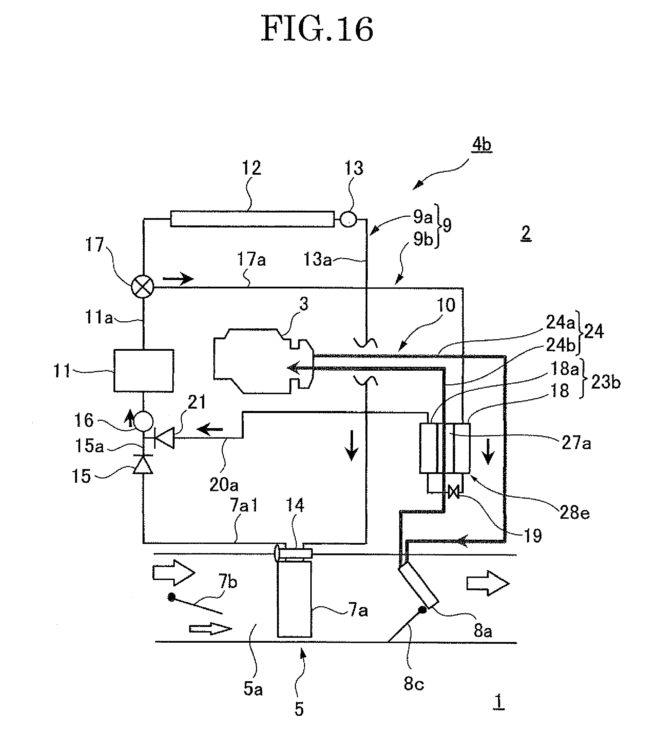

For example, the water heat exchanger 26a can be omitted from the vehicle air conditioning device 4b as shown in FIG. 16. Instead, a water heat exchanger 27a can be disposed in the middle of the path (passage) between the engine cooling water outlet of the heater core 8a and the engine cooling water inlet of the water jacket of the engine 3 and between the first and second external heat exchangers 18, 18a.

With such a configuration, the compressed refrigerant flowing in the first external heat exchanger 18 for refrigerant transfers/receives heat to/from the water heat exchanger 27a to heat, in the water heat exchanger 27a, the engine cooling water flowing from the heater core 8a to the water jacket of the engine 3. Also, it transfers/receives heat to/from the second external heat exchanger 18a to heat the low-pressure liquid refrigerant flowing thereinto and accelerate the evaporation thereof.

In the vehicle air conditioning device 4b according to this example, the water heat exchanger 27a, and first and second external heat exchangers 18, 18a for refrigerant constitute the heat exchange means 28e for heating cooling water.

As described above, the vehicle air conditioning device 4b according to the third embodiment includes the first air-cooling refrigerant circulating passage arrangement 9a to circulate the refrigerant through the compressor 11, condenser 12 for refrigerant condensation, first orifice 14 and evaporator 7a in this order as well as the cooling water circulating passage arrangement 10 for air heating to circulate the engine cooling water between the water jacket of the engine 3 and the heater core in the vehicle cabin 1.

Further, the vehicle air conditioning device 4b includes the bypass passage connected with the compressor 11 in parallel with the condenser 12 and evaporator 7a and the three-way electromagnetic switching valve 17 to switchably make the refrigerant discharge opening of the compressor 11 communicate with either of the condenser 12 and the bypass passage.

Further, the vehicle air conditioning device 4b comprises the water heat exchanger 26a (27a) disposed in the middle of the passage between the water jacket of the engine 3 and the heater core 8a, and the heat exchange means 28d (28e) for heating cooling water provided in the middle of the bypass passage to transfer/receive heat with to/from the water heat exchanger 26a (27a).

Further, the vehicle air conditioning device 4b includes the control unit 29 configured to operate the compressor 11 and control the three-way electromagnetic switching valve 17 to make the refrigerant discharge opening of the compressor 11 communicate with the bypass passage when the temperature of the engine cooling water is a predetermined value or less at the engine start.

Further, the heat exchange means 28d (28e) for heating cooling water comprises the first external heat exchanger 18 for refrigerant condensation provided in the middle of the bypass passage, the second orifice 19 to inflate the refrigerant condensed in the external heat exchanger 18 and the second external heat exchanger 18a to evaporate the liquid refrigerant inflated by the second orifice 19 by absorbing heat therefrom. The heat exchange means 28d (28e) for heating cooling water further comprises the water heat exchanger 26a (27a) which flows the engine cooling water to flow between the water jacket of the engine 3 and the heater core 8a and is disposed between the first and second external heat exchangers 18, 18a.

With such a configuration, the device can rapidly increase the temperature of the engine cooling water used for heating the air in the vehicle cabin in the engine start period in a low ambient temperature. Specifically, the temperature of the engine cooling water can be rapidly increased by using the heat released from the second external heat exchanger 18a for refrigerant to heat the engine cooling water.

Further, by using the heat released from the first external heat exchanger 18, it is able to heat the low-pressure liquid refrigerant flowing into the second external heat exchanger 18a for liquid refrigerant to accelerate the evaporation thereof.

Further, according to the vehicle air conditioning device 4b in the present embodiment the heat exchange means 28d for heating cooling water is the water heat exchanger 26a configured to flow the engine cooling water which flows from the water jacket of the engine 3 to the heater core and it is disposed between the first and second external heat exchangers 18, 18a.

With such a configuration, in the refrigeration cycle for heating the engine cooling water, the high-pressure, high-temperature compressed refrigerant in the first external heat exchanger 18 can heat the engine cooling water in the water heat exchanger 26a flowing from the water jacket of the engine 3 to the heater core, which can improve the heating efficiency of the engine cooling water.

In addition, a part of the high-pressure, high temperature compressed refrigerant in the first external heat exchanger 18 can heat the low-pressure liquid refrigerant flowing into the second external heat exchanger 18a via the water heat exchanger 26a to accelerate the evaporation thereof. Disposed between the first and second external heat exchangers 18, the water heat exchanger 26a can be integrally provided with them to form one heat exchange means 18, thereby making it easier to handle the heat exchange means for heating water and secure the space for placing it.

Further, according to the vehicle air conditioning device 4b in the present embodiment, the heat exchange means 28e for heating cooling water is the water heat exchanger 27a to flow the engine cooling water which flows from the heater core 8a to the water jacket of the engine and it is disposed between the first and second heat exchangers 18, 18a.

With such a configuration, in the refrigeration cycle for heating engine cooling water, high-pressure, high-temperature compressed refrigerant in the first external heat exchanger 18 can heat the engine cooling water flowing from the heater core to the water jacket of the engine 3, which can improve the heating efficiency of the engine cooling water. Also, it can heat the low-pressure liquid refrigerant flowing into the second external heat exchanger 18a via the water heat exchanger 27a to accelerate the evaporation thereof.

Further, disposed between the first and second external heat exchangers 18, 18a, the water heat exchanger 27a can be integrally provided with them to form one heat exchange means 18, thereby making it easier to handle the heat exchange means for heating water and secure the space for placing it.

Moreover, according to the vehicle air conditioning device 4b in the present embodiment, the accumulator 16 is disposed at downstream of the first and second one-way valves 15, 21 by way of example. The present invention should not be limited to such an example. For example, the accumulator 16 can be disposed at downstream of the first one-way valve 15 and at upstream of the connecting portion of the third bypass refrigerant passage 20a where the second one-way valve 21 is placed and the fourth refrigerant passage 15a. Alternatively, it can be disposed at upstream of the second one-way valve 21. With the accumulator 16 disposed as above, liquefied refrigerant gas occurring in the engine start period or in a low ambient temperature can be accumulated in the accumulator 16, which can reduce a loss of the heat exchange between the first external heat exchanger 18 and the water heat exchanger 26a (27a) constituting the heat exchange means 28d (28e) for heating cooling water, rapidly increase the temperature of the engine cooling water and quickly and comfortably warm up the vehicle cabin.

(Fourth Embodiment)

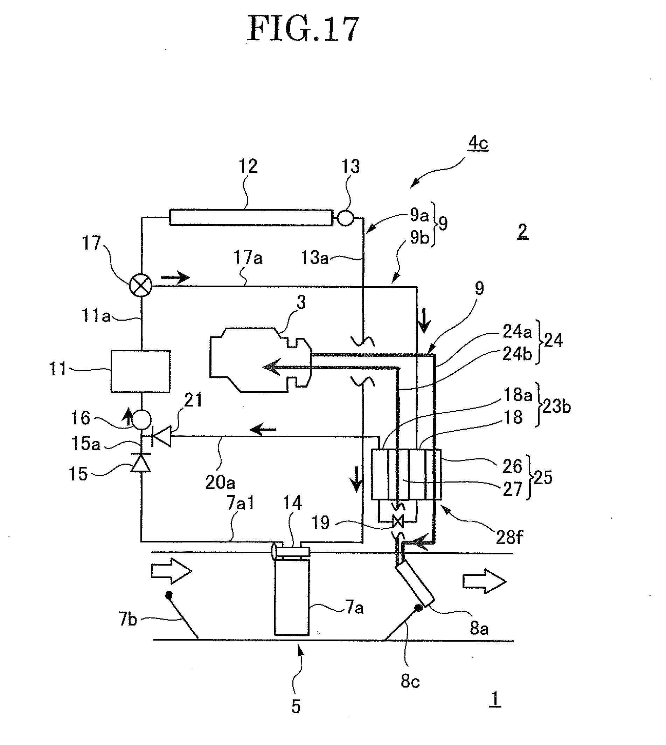

FIG. 17 schematically shows the structure of a vehicle air conditioning device according to a fourth embodiment of the present invention. Note that the same reference numbers are given to the same or like parts as those of the vehicle air conditioning device according to the first embodiment in FIG. 1. A description on an overlapping portion will be omitted.

A vehicle air conditioning device 4c in FIG. 17 according to the present embodiment also includes the refrigerant circulating passage arrangement 9 and the cooling water circulating passage arrangement 10. The refrigerant circulating passage arrangement 9 includes the first refrigerant circulating passage arrangement 9a to perform air cooling refrigeration cycle (air cooling cycle) and the second refrigerant circulating passage arrangement 9b to perform refrigeration cycle for heating cooling water (air heating cycle). The refrigerant circulating passage arrangement 9a is structured the same as that in the first embodiment.

The second refrigerant circulating passage arrangement 9b includes the compressor 11, the three-way electromagnetic switching valve 17 interposed in the middle of the first air-cooling refrigerant passage 11a, the first bypass refrigerant passage 17a connected at one end with the three-way electromagnetic switching valve 17, the first external heat exchanger 18 for refrigerant condensation (heating cooling water) disposed outside the vehicle cabin 1 and connected at a refrigerant inlet (not shown) with the other end of the first bypass refrigerant passage 17a, and the second orifice 19 outside the vehicle cabin 1 connected with a refrigerant outlet (not shown) of the first external heat exchanger 18.

Further, the second refrigerant circulating passage arrangement 9b includes the second external heat exchanger 18a for refrigerant evaporation supplied with the refrigerant inflated by the second orifice 19, second bypass refrigerant passage 20a connected at one end with the refrigerant outlet (not shown) of the second external heat exchanger 18a, second one-way valve 21 connecting the other end of the third bypass refrigerant passage 20a and the middle of the fourth air-cooling refrigerant passage 15a connected with the refrigerant outlet (not shown) of the first one-way valve 15, and accumulator 16.

The refrigerant discharged from the compressor 11 flows through the three-way electromagnetic switching valve 17, first bypass refrigerant passage 17a, external heat exchanger 18, second orifice 19, second external heat exchanger 18a, second bypass refrigerant passage 20a, one-way valve 21, and accumulator 16 in this order, and then is returned to the compressor 11 to circulate. The second refrigeration cycle is thus repeated.

In the first and second bypass refrigerant passages 17a, 20a, a not-shown bypass passage is formed to communicate (connect) with the compressor 11 in parallel with the condenser 12 and the evaporator 7a. The heat exchange means 23b for refrigerant comprising the first and second external heat exchanger 18, 18a is disposed in the middle of this bypass passage.

The cooling water circulating passage arrangement 10 for air heating includes the passage in the water jacket of the engine 3 and the cooling water circulating passage 24 to flow into the heater core 8a the cooling water discharged from the cooling water outlet (not shown) of the water jacket of the engine 3 by a not-shown water pump and to return the cooling water to the passage in the water jacket of the engine 3.

The cooling water circulating passage 24 includes the first cooling water passage 24a connecting (making communicate) the cooling water outlet (not shown) of the water jacket of the engine 3 and the cooling water inlet (not shown) of the heater core 8a and the second cooling water passage 24b connecting (making communicate) the first cooling water outlet (not shown) connected with the cooling water inlet (not shown) of the heater core 8a and the cooling water outlet (not shown) of the water jacket of the engine 3. Also, the water heat exchange unit 25 is disposed in the middle of the cooling water circulating passage 24.

The water heat exchange unit 25 includes the first water heat exchanger 26 provided in the middle of the first cooling water passage 24a and the second water heat exchanger 27 provided in the middle of the second cooling water passage 24b. A part of the first cooling water passage 24a is formed in the first water heat exchanger 26 while a part of the second cooling water passage 24b is formed in the second water heat exchanger 27.

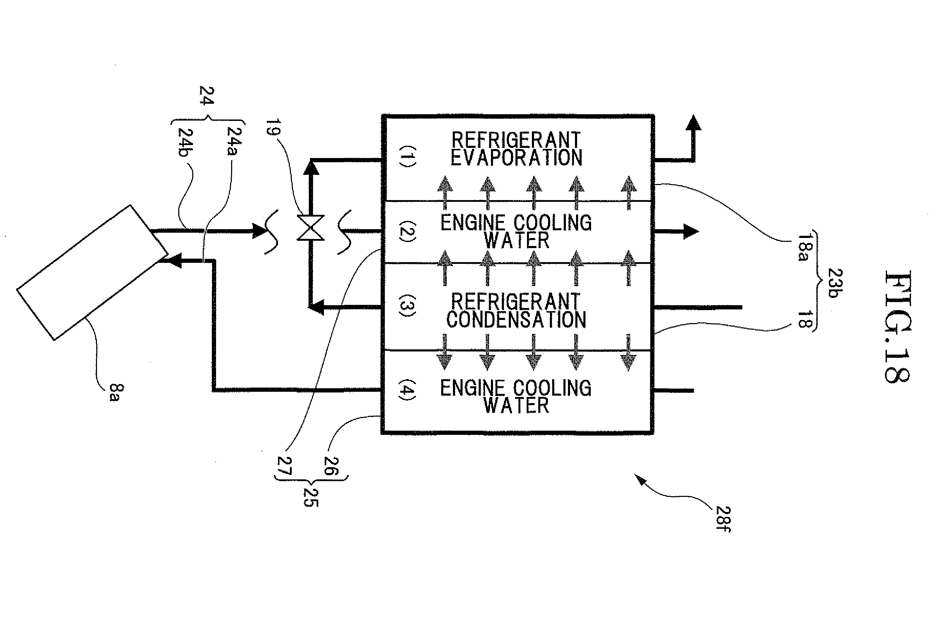

As shown in FIGs. 17, 18, the second external heat exchanger for refrigerant 18 is disposed between the first and second water heat exchangers 26, 27, and the second water heat exchanger 27 is disposed between the second external heat exchangers 18, 18a. The first water heat exchanger 26, first external heat exchanger 18, second water heat exchanger 27 and second external heat exchanger 18a are integrally connected with one another to constitute the heat exchange means 28f for heating cooling water.

Next, the operation of the vehicle air conditioning device 4c according to the present embodiment is described.

(Normal Air Cooling Operation)

The normal air cooling operation is the same as that in the first embodiment so that a description on an overlapping portion is omitted.

(Air Heating Operation in Low Ambient Temperature)

At start of the engine 3 by turning on a not-shown ignition switch of the vehicle, the water temperature sensor 30 detects the temperature of the engine cooling water of the water jacket of the engine 3 and outputs a temperature detection signal to the control unit 29 (FIG. 3).

Then, the air heating switch 32 (FIG. 3) is turned on and an ON signal is input to the control unit 29 as an instruction for air heating of the vehicle air conditioning device 4. The control unit 29 determines from the temperature detection signal of the water temperature sensor 30 whether or not the temperature of the engine cooling water has reached a required temperature (predetermined temperature) for heating the air in the vehicle cabin 1.

In the engine starting period in a low ambient temperature in winter or the like, determining that the temperature of the engine cooling water has reached a required temperature (predetermined temperature) for heating the air in the vehicle cabin 1, the control unit 29 controls the three-way electromagnetic switching valve 17 to operate.

The control unit 29 controls the three-way electromagnetic switching valve 17 to shut off the refrigerant outlet (not shown) of the compressor 11 and the refrigerant inlet (not shown) of the condenser 12 and make the refrigerant outlet (not shown) of the compressor 11 communicate with the first bypass refrigerant passage 17a as the bypass passage. In this manner, even with the compressor 11 in operation, the refrigerant is prevented from flowing through the condenser 12, liquid tank 13, first orifice 14, evaporator 7a and else.

Then, the control unit 29 controls the door driver 8c1 to open the upstream of the air path (not shown) of the heater core 8a with the mixing door 8c and controls the door driver 6c1 of the intake unit 6b to close the outer air inlet 6b1 of the intake unit 6b and open the inner air inlet 6b2.

Next, the control unit 29 operates the blower 6a to absorb the air in vehicle cabin 1 from the inner air inlet 6b2. The absorbed air flows into the air passage 5a and the not-shown air path of the evaporator 7a and is blown out in the vehicle cabin 1 from the air outlet 8e via the air path of the heater unit 8 (not shown) and the mixing chamber 8d. Even with the compressor 11 in operation, the refrigerant is prevented from supplied to the evaporator 7a as described above, so that the air from the blower 6a passing through the air path (not shown) of the evaporator 7a cannot be cooled by the evaporator 7a.

The control unit 29 then operates the compressor 11 to compress the refrigerant gas and discharge high-temperature, high-pressure compressed refrigerant to the first air-cooling refrigerant passage 11a. The compressed refrigerant flows through the three-way electromagnetic switching valve 17, first bypass refrigerant passage 17a, first external heat exchanger 18, second orifice 19, second external heat exchanger 18a, third bypass refrigerant passage 20a, one-way valve 21, and accumulator 16 in this order, and is returned to the compressor 11 to circulate.

The compressed refrigerant is deprived of heat and condensed in the first external heat exchanger 18 to become high-pressure liquid refrigerant. The liquid refrigerant is inflated by the second orifice 19 to become low-pressure liquid refrigerant, then flows into the second external heat exchanger 18a and is evaporated thereby to refrigerant gas. The evaporated refrigerant gas is returned to the compressor 11 via the third bypass refrigerant passage 20a, second one-way valve 21, and accumulator 16.

Also, the engine cooling water from the water jacket of the engine 3 flows into the heater core 8a via the first water heat exchanger 26 and is returned to the water jacket of the engine 3 via the second water heat exchanger 27 to circulate.

Along with this, flowing in the first external heat exchanger 18, heat of the compressed refrigerant is transferred between the first external heat exchanger 18 and the first water heat exchanger 26 to heat the engine cooling water in the first water heat exchanger 26 flowing to the heater core 8a, as well as between the first external heat exchanger 18 and the second water heat exchanger 27 to heat the engine cooling water in the second water heat exchanger 27 flowing from the heater core 8a to the water jacket of the engine 3.

The engine cooling water heated in the first external heat exchanger 18 and the first water heat exchanger 26 is supplied to the heater core 8a and heats the air flowing through the air path (not shown) of the heater core 8a. The heated air is blown out in the vehicle cabin 1 from the air outlet 8e to heat there. The engine cooling water heated in the first external heat exchanger 18 and the second water heat exchanger 27 is returned to the water jacket of the engine 3 to circulate.

The second external heat exchanger 18a and second water heat exchanger 27 transfer heat to heat the low-pressure liquid refrigerant flowing into the second external heat exchanger 18a with the heat from the engine cooling water in the second water heat exchanger 27 to accelerate evaporation of the engine cooling water.

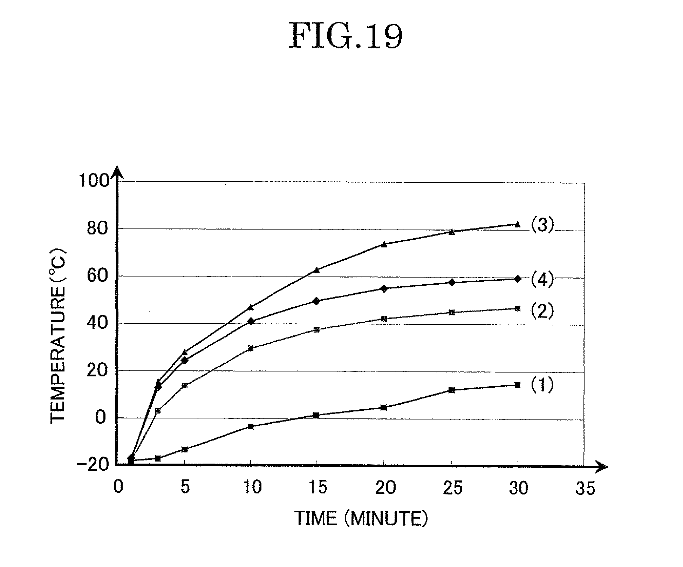

FIG. 19 shows the temperature characteristics of portions (1) to (4) (refrigerant evaporation, engine cooling water, refrigerant condensation, engine cooling water) of the heat exchange means 28f for heating cooling water in FIG. 18.

In FIG. 19 the line (1) indicates the temperature characteristic of the refrigerant in the second external heat exchanger 18a, the line (2) indicates the temperature characteristic of the engine cooling water in the second water heat exchanger 27, the line (3) indicates the temperature characteristic of the refrigerant in the first external heat exchanger 18 and the line (4) indicates the temperature characteristic of the engine cooling water in the first water heat exchanger 26.

As obvious from the line (4), being heated by the first external heat exchanger 18, the temperature of the engine cooling water in the first water heat exchanger 26 flowing to the heater core 8a abruptly rises in an air heating start period.

Further, the engine cooling water flowing from the heater core 8a to the water jacket of the engine 3 is deprived of thermal energy into the interior air in the heater core 8a and decreased in temperature. Meanwhile, the compressed refrigerant in the first external heat exchanger 18 is deprived of a large amount of thermal energy into the engine cooling water in the first water heat exchanger 26 and decreased in temperature. The engine cooling water in the second water heat exchanger 27 is deprived of thermal energy for heating and evaporates the liquid refrigerant flowing into the second external heat exchanger 18a.

As a result, heated by the first external heat exchanger 18 in the air heating start period, the engine cooling water flowing from the heater core 8a to the water jacket of the engine 3 abruptly rises in temperature (water temperature) but the temperature is slightly lower than that of the engine cooling water flowing in the first water heat exchanger 26, as obvious from the line (2).

However, while returning to the water jacket of the engine 3 from the heater core 8a, the engine cooling water is heated by the heat from the compressed refrigerant in the first external heat exchanger 18 so that it can maintain a higher temperature than when returning from the heater core 8a to the water jacket of the engine 3. Because of this, the air heating operation can be prevented from being encumbered at start of the engine in a low ambient temperature.

When the compressed refrigerant in the compressor 11 is supplied to the first external heat exchanger 18, the temperature thereof abruptly rises as obvious from the line (3) and is higher than the lines (1), (2), (4). Meanwhile, the temperature of the refrigerant in the second external heat exchanger 18a gradually rises and is much lower than the temperature of the line (2) as obvious from the line (1).

As described above, the vehicle air conditioning device 4c according to the present embodiment includes the first air-cooling refrigerant circulating passage arrangement 9 to circulate refrigerant through the compressor 11, condenser 12, first orifice 14 and evaporator 7a in this order as well as the cooling water circulating passage arrangement 10 for air heating to circulate the engine cooling water between the water jacket of the engine 3 and the heater core in the vehicle cabin 1.

Further, the vehicle air conditioning device 4c includes the bypass passage connected with the compressor 11 in parallel with the first external heat exchanger 12 and evaporator 7a and the three-way electromagnetic switching valve 17 to switchably make the refrigerant discharge opening of the compressor 11 communicate with either of the condenser 12 and the bypass passage.

Further, the vehicle air conditioning device 4bc comprises the water heat exchange unit 25 disposed in the middle of the passage between the water jacket of the engine 3 and the heater core 8a, and the heat exchange means 28f for heating cooling water including the refrigerant heat exchange means 23b provided in the middle of the bypass passage to transfer/receive heat to/from the water heat exchange unit 25.

Further, the vehicle air conditioning device 4c includes the control unit 29 configured to operate the compressor 11 of the first refrigerant circulating passage arrangement 9a and control the three-way electromagnetic switching valve 17 to make the refrigerant discharge opening of the compressor 11 communicate with the bypass passage when the temperature of the engine cooling water is a predetermined value or less at the engine start.

Further, the refrigerant heat exchange means 23b comprises the first external heat exchanger 18 for refrigerant condensation provided in the middle of the bypass passage, the second orifice 19 to inflate the refrigerant condensed in the first external heat exchanger 18 and the second external heat exchanger 18a to evaporate the liquid refrigerant inflated by the second orifice 19 by absorbing heat therefrom.

The water heat exchange means 23b comprises the first water heat exchanger 26 to flow the engine cooling water which flows from the water jacket of the engine 3 to the heater core 8a and the second water heat exchanger 27 to flow the engine cooling water which flows from the heater core 8a to the water jacket of the engine 3. The first external heat exchanger 18 is disposed between the first and second water heat exchangers 26, 27 and the second water heat exchanger 27 is disposed between the first and second external heat exchangers 18, 18a.

Such a simple structure can rapidly increase the temperature of the engine cooling water for heating the air in the vehicle cabin by using the engine cooling water in the engine start period in a low ambient temperature.

Specifically, in the refrigeration cycle in which the engine cooling water supplied to the heater core 8a is heated with the compressor 11 for air cooling, the engine cooling water can be heated using the first external heat exchanger 18 for refrigerant condensation. This makes it possible to rapidly increase the temperature of the engine cooling water used for heating the air in the vehicle cabin 1 in the engine start period in a low ambient temperature. Besides, in the refrigeration cycle it is able to accelerate the evaporation of the refrigerant in the second external heat exchanger 18a for liquid refrigerant evaporation by heating with the engine cooling water flowing from the heater core 8a. Thus, the refrigeration cycle for heating cooling water can be maintained over a long time.

Further, the first external heat exchanger 18 is disposed between the first and second water heat exchangers 26, 27 and the second water heat exchanger 27 is disposed between the first and second external heat exchangers 18, 18a. Because of this, the first and second water heat exchangers 26, 27 and the first and second external heat exchangers 18, 18a can be integrally formed to be one heat exchange means, which makes it easier to handle it and secure the space for placing it.

Furthermore, in the vehicle air conditioning device 4c according to the present embodiment the accumulator 16 is placed at downstream of the first and second one-way valves 15, 21 by way of example. However, the present invention should not be limited to such an example. The accumulator 16 can be placed at downstream of the first one-way valve 15 and at upstream of a connecting portion of the second bypass refrigerant passage 18a on which the second one-way valve 21 is placed and the fourth refrigerant passage 15a, for example. Alternatively, it can be placed at upstream of the second one-way valve 21.

Thus, by placement of the accumulator 16, the liquefied refrigerant gas occurring in the engine start period or in a low temperature can be accumulated in the accumulator 16. This makes it possible to reduce loss of the heat exchange between the first and second water heat exchangers 26, 27 constituting the water heat exchange unit 25 and the first external heat exchanger 18 and to rapidly increase the temperature of the engine cooling water and quickly and comfortably warm up the vehicle cabin.

Priority Claim

The present application is based on and claims priority from Patent Application No. 2009-289282, flied on December 21, 2009 with the Japanese Patent Office, Patent Application No. 2009-003300, No. 2009-003301, No. 2009-003302, and No. 2009-003303 flied on January 9, 2009 with the Japanese Patent Office, the disclosure of which is hereby incorporated by reference in its entirety.

**Claims**

1. A vehicle air conditioning device comprising:

   a refrigerant circulating passage arrangement for air cooling through which refrigerant is circulated among a compressor, a condenser for refrigerant condensation outside a vehicle cabin, a first inflation and depressurization means, an evaporator for air cooling and liquid refrigerant evaporation inside the vehicle cabin and an accumulator in this order;
   a cooling water circulating circuit for air heating configured to circulate cooling water between a heater core;
   a bypass passage connected in parallel with the condenser and the evaporator and connected with the compressor via the accumulator;
   a switching valve configured to switchably make a refrigerant discharge opening of the compressor communicate with either the condenser or the bypass passage; and
   a heat exchange means for heating water comprising a water heat exchange means disposed in the middle of a passage to the heater core and a refrigerant heat exchange means disposed in the middle of the bypass passage to transfer/receive heat to/from the water heat exchange means, wherein:
   the refrigerant heat exchange means comprises a heat exchange means for refrigerant condensation provided in series in the middle of the bypass passage and a second inflation and depressurization means configured to inflate the refrigerant condensed by the heat exchange means for refrigerant condensation;
   the water heat exchange means comprises a water heat exchanger configured to flow cooling water to the heater core; and
   the heat exchange means for refrigerant condensation is configured to be able to heat the cooling water in the water heat exchanger.

2. A vehicle air conditioning device according to claim 1, wherein
   the heat exchange means for refrigerant condensation comprises first and second heat exchangers for refrigerant condensation provided in series in the middle of the bypass passage and a third heat exchanger configured to evaporate the refrigerant inflated by the second inflation and depressurization means by absorbing heat from the refrigerant condensed by the second heat exchanger.

3. A vehicle air conditioning device according to claim 1, wherein
   the water heat exchanger is provided in the middle of a passage through which the cooling water flows into the heater core.

4. A vehicle air conditioning device according to claim 1, wherein
   the water heat exchanger is provided in the middle of a passage through which the cooling water flows from the heater core.

5. A vehicle air conditioning device according to any one of claims 1 to 4, wherein:

    the water heat exchange means comprises a first water heat exchanger provided in the middle of the passage through which cooling water flows into the heater core and a second water heat exchanger provided in the middle of the passage through which cooling water flows from the heater core; and
    the first external heat exchanger is disposed between the first and second water heat exchangers.

6. A vehicle air conditioning device according to any one of claims 1 to 5, wherein
the second and third heat exchangers are integrally connected with each other to be heat exchangeable.

7. A vehicle air conditioning device according to claim 1, wherein:

    the heat exchange means for refrigerant condensation comprises first and second heat exchangers for refrigerant condensation provided in series in the middle of the bypass passage, and a third heat exchanger configured to absorb heat from the refrigerant condensed by the second heat exchanger to evaporate the refrigerant inflated by the second inflation and depressurization means;
    the water heat exchange means comprises a water heat exchanger to flow engine cooling water which flows between an engine water jacket and the heater core;
    the first heat exchanger is configured to be able to heat the engine cooling water in the water heat exchanger;
    a switching element is provided to switch among a first flow from the condenser and the first inflation and depressurization means, a second flow from the first to second heat exchangers, and a third flow from the first heat exchanger to the first inflation and depressurization means.

8. A vehicle air conditioning device according to claim 7, wherein
the switching element is disposed in the middle of a first passage between the condenser and the first inflation and depressurization means and a second passage from the first to second heat exchangers.

9. A vehicle air conditioning device according to either claim 7 or 8, wherein
the water heat exchanger is provided in the middle of the passage through which cooling water flows from the engine water jacket to the heater core.

10. A vehicle air conditioning device according to any one of claims 7 to 9, wherein
the third heat exchanger is integrally provided with the second heat exchanger.

11. A vehicle air conditioning device according to claim 7, wherein
the water heat exchange means comprises a first water heat exchanger provided in the middle of the passage through which cooling water flows from the water jacket to the heater core and a second water heat exchanger provided in the middle of the passage through which cooling water flows from the heater core to the water jacket;
the engine cooling water in the first water heat exchanger is heatable by the first heat exchanger for refrigerant condensation, and the cooling water in the second heat exchanger is able to heat the refrigerant in the second heat exchanger for refrigerant condensation;
a third passage through which a first passage between the condenser and the first inflation and depressurization means and a second passage from the first to second heat exchangers communicate with each other is additionally provided; and
the switching element includes a first switching element disposed between the middle of the first passage and the third passage and a second switching element disposed between the middle of the second passage and the third passage.

12. A vehicle air conditioning device according to claim 1, wherein
the heat exchange means for refrigerant condensation comprises a first heat exchanger for refrigerant condensation provided in series in the middle of the bypass passage and a second heat exchanger configured to absorb heat from the refrigerant condensed by the first heat exchanger to evaporate the refrigerant inflated by the second inflation and depressurization means;
the water heat exchange means comprises a water heat exchanger to flow engine cooling water which flows between an engine water jacket and the heater core; and
the water heat exchanger is disposed between the first and second heat exchangers.

**13.** A vehicle air conditioning device according to claim 12, wherein
the engine cooling water flowing in the water heat exchanger flows from the water jacket to the heater core.

**14.** A vehicle air conditioning device according to claim 12, wherein
the engine cooling water flowing in the water heat exchanger flows from the heater core to the water jacket,

**15.** A vehicle air conditioning device according to claim 1, wherein
the heat exchange means for refrigerant condensation comprises a first heat exchanger for refrigerant condensation provided in series in the middle of the bypass passage and a second heat exchanger configured to absorb heat from the refrigerant condensed by the first heat exchanger to evaporate the refrigerant inflated by the second inflation and depressurization means;
the water heat exchange means comprises a first water heat exchanger to flow engine cooling water which flows from an engine water jacket to the heater core and a second water heat exchanger to flow engine cooling water which flows from the heater core to the engine water jacket; and
the first heat exchanger is disposed between the first and second water heat exchangers and the second water heat exchanger is disposed between the first and second heat exchange means.

EP 2 383 129 A1

# FIG.1

29

# FIG.2

# FIG.3

# FIG.4

HEAT EXCHANGE AMOUNT OF
HIGH PRESSURE HEAT EXCHANGER

PRESSURE

COMPRESSOR'S
OPERATION POWER

HEAT EXCHANGE AMOUNT OF
LOW PRESSURE HEAT EXCHANGER

ENTROPY

NORMAL CYCLE OPERATION

# FIG.5

PRESSURE

HEAT EXCHANGE AMOUNT OF
HIGH PRESSURE HEAT EXCHANGER

COMPRESSOR'S
OPERATION POWER

HEAT EXCHANGE AMOUNT OF
LOW PRESSURE HEAT EXCHANGER

ENTROPY

ALMOST NO HEAT EXCHANGE BETWEEN
HIGH PRESSURE AND LOW PRESSURE HEAT EXCHANGERS

# FIG.6

# FIG.7

# FIG.8

EP 2 383 129 A1

# FIG.9

35

# FIG.10

# FIG.11

# FIG.12

# FIG.13

EP 2 383 129 A1

# FIG.14

# FIG.15

# FIG.16

# FIG.17

# FIG.18

# FIG.19

<table>
<tr><td colspan="2" align="center">**INTERNATIONAL SEARCH REPORT**</td><td>International application No.<br>PCT/JP2010/050125</td></tr>
</table>

A. CLASSIFICATION OF SUBJECT MATTER
*B60H1/03*(2006.01)i, *B60H1/22*(2006.01)i

According to International Patent Classification (IPC) or to both national classification and IPC

B. FIELDS SEARCHED

Minimum documentation searched (classification system followed by classification symbols)
B60H1/03, B60H1/22

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-21730 A (Mitsubishi Heavy Industries, Ltd.), 26 January 2006 (26.01.2006), paragraphs [0008] to [0010], [0024] to [0033]; fig. 1 (Family: none) | 1-15 |
| Y | JP 2004-216934 A (Denso Corp.), 05 August 2004 (05.08.2004), paragraphs [0017], [0037], [0045]; fig. 1, 2 (Family: none) | 1-15 |
| Y<br>A | JP 10-76837 A (Calsonic Corp.), 24 March 1998 (24.03.1998), paragraphs [0027], [0037] to [0039]; fig. 1 to 4 (Family: none) | 5-15<br>1-4 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 February, 2010 (04.02.10) | Date of mailing of the international search report<br>16 February, 2010 (16.02.10) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2010/050125

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-154841 A  (Japan Climate Systems Corp.), 27 May 2003 (27.05.2003), paragraphs [0005], [0023] to [0025]; fig. 1 (Family: none) | 1-15 |
| A | JP 2002-301929 A  (Calsonic Kansei Corp.), 15 October 2002 (15.10.2002), paragraph [0037]; fig. 1, 2 (Family: none) | 1-15 |
| A | JP 6-262936 A  (Calsonic Corp.), 20 September 1994 (20.09.1994), paragraphs [0013], [0019], [0031], [0032]; fig. 1 (Family: none) | 1-15 |

Form PCT/ISA/210 (continuation of second sheet) (April 2007)

**INTERNATIONAL SEARCH REPORT**

International application No.

PCT/JP2010/050125

The description in each claim lacks the clarity within the meaning of PCT Article 6, so that the novelty and inventive step are determined referring to the statements in the relevant portions of the description and drawings.

(1) In general, heat exchangers are configured in such a manner that a high temperature fluid and a low temperature fluid exchange heat with each other while flowing in respective flow paths formed on both sides of a heat transfer partition wall (heat transfer surface). In each claim, it is assumed that, in general, the word "heat exchange means" is used to mean an ordinary heat exchanger and the word "heat exchanger" is used to mean the flow path. However, there are statements (claim 1) that a heat exchange means is provided with another heat exchange means and that a refrigerant heat exchange means performs transmission and reception of heat to and from a water heat exchange means. Thus, the "heat exchange means" and the "heat exchanger" are not clearly distinguished from each other and are mixed, and therefore the use of the terms is inappropriate.

(2) In the invention in claim 4, there is a statement that a water heat exchanger is provided in the middle of a flow path which leads cooling water from a heater core (that is, the water heat exchanger is located on the downstream side of a heater core). However, claim 1 cited in claim 4 states that a water heat exchange means provided with a water heat exchanger is provided in the middle of a flow path which leads cooling water to the heater core (that is, the water heat exchange means is located on the upstream side of the heater core). Thus, the configuration of the invention in claim 4 is contradictory to the configuration of the invention in claim 1. In order that the configurations are not contradictory to each other, it is necessary to limit the configuration of the water heat exchanger to a configuration in which, as stated in claim 5, water upstream of the heater core is allowed to flow in the water heat exchanger and water downstream of the heater core is also allowed to flow in the water heat exchanger.

(3) In the invention in claim 5, there is a statement "the first external heat exchanger"; however, the constituting element named "external heat exchanger" does not appear before this statement and, therefore, it is not clear what the "external heat exchanger" is like and what the article "the" means. Also, it is not clear what kind of state is meant by "first external heat exchanger is provided between first and second water heat exchangers."

(4) In the invention in claim 6, there is a statement "the second and third heat exchangers"; however, such configurations do not appear before this statement in claim 6 and are not stated in claim 1 cited in claim 6. Therefore, it is not clear what the configurations are like.

(5) In the invention in claim 7, there is a statement "a third flow from the first heat exchanger to the first expansion/pressure-reduction means side"; however, the configuration relating to the flow path for such a flow does not appear before this statement and therefore it is not clear what the "third flow" is like. For example, the scope of the flow path of each name and the constitution relating to the positions of connection between such flow paths in the statement "a third flow path for interconnecting the first flow path and the second flow path" (continued to next sheet)

**INTERNATIONAL SEARCH REPORT**

International application No.

PCT/JP2010/050125

in claim 11 and in the statements appearing before after this statement are required to be clearly defined.

Also, it is stated that a "switching means" is a means for switching between three flows which are a first flow, a second flow, and a third flow; however, it is not clear what kind of means the "switching means" is. For example, there is no statement about the start point of the first flow, and the second and third flows both start from the exit of a first heat exchanger. However, that flow path of the third flow which merges with the first flow is not defined, and therefore, how the flow having no clear start point is switched is not clear.

In addition, in claim 1, there is already a statement about the configuration of "a switching valve for switching and connecting the refrigerant exit of a compressor to either the condenser (corresponding to the first flow) or the bypass flow path (corresponding to the second flow)"; however, it is not clear what kind of relationship does the "switching means" has with the "switching valve," nor clear whether the "switching means" has no relationship with the "switching valve" and is a separate body from the "switching valve."

(6) In the invention in claim 8, what kind of condition "provided in the middle of first and second flow paths" means is not clear. For example, as stated above for claim 7, the presence of the configuration relating to the flow path for interconnecting the first and second flow paths is not stated.

(7) In the invention in claim 11, there is a statement "engine cooling water in a first water heat exchanger is adapted to be able to be heated by a first heat exchanger for refrigerant condensation, and engine cooling water in the second water heat exchanger is adapted to be able to heat the refrigerant in the second heat exchanger for refrigerant condensation." From this statement and the statement before this statement, it can be understood that the first and second water heat exchangers are provided upstream and downstream, respectively, of a heater core and that cooling water passing through the first and second water heat exchangers is first heated by the first heat exchanger for refrigerant condensation, is then cooled by the heater core, and finally heat the refrigerant in the second heat exchanger for refrigerant condensation. Also, it is understood from the statements that the temperatures of the refrigerants in the first and second heat exchangers for refrigerant condensation are practically the same and are constant (assuming that each refrigerant is a single-component refrigerant and that pressure loss is neglected) and that the cooling water is not raised in temperature by the first heat exchanger for refrigerant condensation to a level which can heat the refrigerant in the second heat exchanger for refrigerant condensation. However, the configurations of other heat sources for achieving the above statements and conditions relating to the elapse of time after the start of an engine are not stated, and therefore, how "is adapted to be able to heat the refrigerant," which is in the statement above, is not clear.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8310227 A
- JP 2009289282 A
- JP 2009003300 A
- JP 2009003301 A
- JP 2009003302 A
- JP 2009003303 A